# EUROPEAN PATENT SPECIFICATION

(11) **EP 1 916 044 B1**
(45) Date of publication and mention of the grant of the patent: **07.01.2009**
(21) Application number: 07380279.5
(22) Date of filing: 17.10.2007
(51) Int. Cl.: B21J 15/34, B23P 19/00, B25B 23/04, B25C 1/00, F16B 15/08, F16B 27/00

(54) **Device and method for storing and dispensing components, and storage and transport case used**
Vorrichtung und Verfahren zur Lagerung und Ausgabe von Verbindungselementen sowie dafür verwendete Lagerungs- und Transporthülse
Dispositif et procédé pour stocker et distribuer des éléments de fixation, et douille de stockage et de transport utilisée

(30) Priority: 26.10.2006 ES 200602730
(43) Date of publication of application: 30.04.2008
(73) Proprietor: SERRA SOLDADURA, SA, 08040 Barcelona (ES)
(72) Inventor: Fustel Gascón, Alfred Serra Soldadura, S.A., 08040 Barcelona (ES); Romà Gomez, Jorge Juan Serra Soldadura, S.A., 08040 Barcelona (ES)
(74) Representative: Gislon, Gabriele

(56) References cited:
- US-A- 4 998 452
- US-A- 5 465 868

## Description

### Field of the Art

The present invention relates to a device and method for storing and dispensing components, particularly fastening elements such as screws or rivets comprising a head and a stem, in which the total length of the component is greater than the maximum width of its head.

The present invention also relates to a storage and transport case used in the device and method for storing and dispensing components.

The present invention is generally applicable in the construction, structure manufacturing and automotive field and more particularly, in the aeronautical construction field.

### Background of the Invention

Patent US-A-5465868 describes a system for dispensing components, such as rivets of the type comprising a head and a stem, the total length of the component being greater than the maximum width of said head. The system comprises a buffer magazine connected to each riveting machine. The buffer magazine includes a plurality of storage tubes, each of which contains a certain amount of components of one and the same type arranged in a row with their stems oriented in the longitudinal direction of the tube. The different storage tubes have different types and/or sizes of components. Each storage tube has an inlet at one end and an outlet at an opposite end, and it is equipped with a step-by-step selecting device to allow the components to pass one by one through said outlet. A mobile dispensing head is mounted on a guide system and actuated to be located in front of the outlet of a selected storage tube and to receive a component therefrom and send it by blowing to the riveting machine through the inside of a transport tube. The system includes a filling station intended to fill the different storage tubes of the buffer magazine with the corresponding components as they are dispensed. A mobile filling head is mounted on a guide system and actuated to be located in front of the inlet of a selected storage tube and to introduce a number of components of the corresponding type inside said tube. The filling station is activated when the level of components inside each tube reaches a predetermined threshold.

The system of the mentioned patent US-A-5465868 provides little flexibility given that, although the buffer magazine can be mounted on wheels and allows certain mobility, the filling station is static and all the equipment must be installed in the same warehouse or location in which the components are being installed.

Patent EP-A-0373685 discloses a device and process for dispensing components, such as rivets, for example, of the type comprising a head and a stem, the total length of the component being greater than the maximum width of said head. The process comprises using a tube with a hollow core adapted to the maximum cross-section of the head of the component as a storage unit, inside which tube the components are arranged in a row, with their stems oriented in the longitudinal direction of the tube, and one after the other, stem-to-head. All the components contained in the tube are identical. Once full, the ends of the tube are sealed with stops, at least one of which stops must be removed at the time of its use in a component feed head. To that end, a compressed fluid is injected through an end of the tube for the purpose of moving the components towards an outlet end of the tube. More specifically, the compressed fluid is admitted through the end of the tube opposite to the outlet end, behind the last component of the row, and is distributed throughout the tube through the inside of one or more longitudinal grooves formed in the inner surface of said hollow core of the tube and open thereto, such that the pressure of the fluid is exerted throughout the entire hollow core in the separation gaps between the components until acting on the first component of the row to drive it towards the outlet end. The device comprises a storage unit formed from one of said tubes rolled in helical form to occupy a space as compact as possible.

A drawback of the device of the mentioned patent EP-A-0373685 is that the components arranged inside the tube oriented with their stems in the longitudinal direction of the tube can overlap or be jammed unless the tube is precisely sized for each component type or size. This in practice forces constructing a specific storage unit for each component type or size. Another drawback is that the entire storage unit must be subjected to the pressure of the compressed fluid for the sole purpose of pushing the components towards the outlet, which forces constructing the storage unit with requirements regarding strength and tightness. The thrust of the compressed fluid is furthermore not enough to send the components removed from the storage unit through the inside of a transport tube, for which it is necessary to have another additional blowing nozzle.

International patent application WO 2004/007142 describes a device for storing and distributing components such as rivets. The device comprises a structure adapted to receive a plurality of portable storage units, each of which essentially corresponds to the storage unit described in the aforementioned patent EP-A-0373685, provided with a component outlet and a fluid inlet to make the components move. The device comprises a mobile distributing head associated to guide and movement means actuated to locate the head in front of the outlet of a selected one of the portable storage units, the head being able to unitarily take and evacuate the components stored inside the portable storage unit in front of which it has been located. The several portable storage units can contain different types of components and the mobile distributing head is associated to a plurality of dispensing tubes the diameters of which correspond to the different types of components to be distributed. Each of the portable storage units is equipped with a specific label providing identification means cooperating with one or more reading heads so that the distributing head can arrange the inlet end of one of the distributing tubes coaxially to the outlet of the selected portable storage unit.

The device of the mentioned international patent application WO 2004/007142 does not solve how the components are selected one by one at the outlet of each of the different portable storage units, or how the components are retained inside the portable storage units when the mobile distributing head is not coupled to the outlet of one of such units. Furthermore, the fact that the mobile distributing head must be moved connected to a plurality of tubes is a drawback due to the bending resistance that the tubes can offer in accordance with their relative rigidity and to the accumulated weight thereof.

Patent EP-A-0855236 describes a device for storing and unitarily distributing components, including a step-by-step selecting device associated to the outlet of a rivet storage unit in the form of a tube in which the rivets are arranged in a row with their stems in the longitudinal direction of the tube. The rivets are sent by blowing along an elastic sleeve installed inside a flexible tube.

Patent US-A-4 998 452 describes a device for storing and unitarily distributing components according to the preamble of the claims 1, 25 and 26. The components are housed in a cylindrical carrier.

### Disclosure of the Invention

According to a first aspect, the present invention provides a device for storing and dispensing components, which are generally fastening elements, such as rivets, nails, screws and the like, comprising a head and a stem, the total length of the component being greater than the maximum width of said head. The device of the present invention includes a plurality of storage and transport cases, each of which comprises a cavity which can completely house one of said components. At one end of the cavity, there is an inlet/outlet opening sized to allow the component to enter and come out of said cavity, and at an opposite end there is a fluid passage hole, sized to allow a transport fluid to pass into the cavity and to prevent the passage of the component. The storing and dispensing device also comprises one or more storage elements, each of which houses a number of said storage and transport cases arranged in a row, in mutual contact and with one component inside each case. Each storage element has an outlet and the storage and transport cases are pushed towards said outlet.

The storage elements are configured and sized to substantially restrict the movements of the storage and transport cases therein except in a forward movement direction towards the outlet and in the opposite direction. The storage and transport cases are preferably arranged in the storage element transversely to said forward movement direction towards the outlet and all of them with said inlet/outlet opening facing one and the same side. The components are also arranged inside the storage and transport cases with one and the same orientation, preferably with the head adjacent to the end of the storage and transport case including the fluid passage hole. The storage element is preferably rectilinear and is arranged in a substantially vertical position and with the outlet at its lower end, such that the storage and transport cases are permanently pushed towards the outlet by gravity. However, the storage and transport cases could be pushed towards the outlet by elastic means or by a compressed fluid and the storage elements could adopt other shapes and/or be arranged in any other position.

The storage element is associated to a step-by-step selecting device adapted to allow the storage and transport cases to pass one by one through the outlet. The storing and dispensing device includes a housing adapted to hold a storage and transport case loaded with a component coming from the outlet of the storage element, and said housing is associated to blowing means adapted to provide the mentioned transport fluid to the mentioned fluid passage hole of the storage and transport case for the purpose of driving the component out of the storage and transport case through said inlet/outlet opening and into a transport tube. An unloading device adapted to unload the empty storage and transport case from the housing is provided for the purpose of leaving such housing free to receive and send a following component.

This construction has several advantages with respect to other known systems. Firstly, one and the same storage and transport case can house components of a great variety of types and within a size range, which can be sent by blowing, by means of one and the same sending unit including the housing, the blowing means, the transport tube and the unloading device. This allows constructing the storage elements with a single size adapted to the dimensions of a single type of storage and transport case to handle different components within a size range. It also allows implementing the storing and dispensing device in a structure adapted to receive a plurality of portable storage units, wherein each of said portable storage units includes a number of identical storage elements, with their outlets aligned in a row. Each portable storage unit is adapted to be filled with storage and transport cases loaded with components, operatively placed in said structure, and removed from the structure to refill it in a filling station which can be located in any other location. All the components loaded in a portable storage unit are preferably of one and the same type, although multiple portable storage units containing different types of components can be arranged in the structure.

Each of said portable storage units comprises mobile selecting members forming part of said step-by-step selecting device, and a locking element adapted to lock said selecting members in a shutting position in which all the outlets of the row of outlets are shut. When the portable storage unit is operatively placed in the structure, a pushing member linked to actuation means and actuation means of the step-by-step selecting device mounted on the structure are coupled to a release mechanism of the locking element and with the selecting members of the step-by-step selecting device, respectively, so as to release the selecting members and actuate them. In the structure, there are arranged movement means that are actuated in a controlled manner to move said pushing element, the actuation means of the step-by-step selecting device, the housing, a blowing nozzle of the blowing means, an inlet end of said transport tube and said unloading device to a suitable site to act in relation to the outlet of a storage element of a portable storage unit containing a selected type of components.

When the range of components to be handled exceeds the size range allowed by a type of storage and transport case, the storing and dispensing device comprises providing two or more different types of storage and transport cases for components of two or more different size ranges. This involves including two or more types of portable storage units adapted to said two or more types of storage and transport cases. All the portable storage units of one and the same type are associated to a corresponding storage and dispensing module adapted to this type of portable storage unit and to the type of storage and transport case it contains. Several of said storage and dispensing modules of one and the same type or of different types can be grouped in a storage and dispensing unit that is optionally equipped with a selecting device adapted to selectively communicate the outlet of the transport tube from each module with the inlet of a single general transport tube through which the components from any of the modules will be sent.

The storing and dispensing device of the present invention can obviously be implemented in a simpler manner by providing a structure in which there is arranged a number of said storage elements containing storage and transport cases loaded with different types of components, in which each storage element contains components of one and the same type. The storage elements can be arranged in the structure such that their outlets form a row or a matrix, and in the structure there are arranged movement means that are actuated in a controlled manner to move the mentioned housing, a blowing nozzle of the blowing means, an inlet end of said transport tube and said unloading device to a suitable site to act in relation to the outlet of a storage element of a portable storage unit containing a selected type of components.

According to a second aspect, the present invention provides a method for storing and dispensing components, in which said components are of the type comprising a head and a stem, the total length of the component being greater than the maximum width of said head. The method of the present invention comprises housing said components in a plurality of storage and transport cases, each of which comprises a cavity which can completely house one of said components, an inlet/outlet opening at one end, sized to allow the component to enter and come out of said cavity, and a fluid passage hole at an opposite end, sized to allow a transport fluid to pass into the cavity and to prevent the passage of the component. Then, a number of said storage and transport cases are arranged with a component housed in each case in one or more storage elements, in which the storage and transport cases are in a row, in mutual contact and pushed towards an outlet. Then, said storage and transport cases are left to pass one by one through said outlet by means of a step-by-step selecting device, and at least one storage and transport case loaded with a component from the outlet is received and supported in a housing. The mentioned transport fluid is then provided, by means of blowing means associated to said housing, to the fluid passage hole of the storage and transport case for the purpose of driving the component out of the storage and transport case through said inlet/outlet opening and into a transport tube. The method reliably comprises unloading the empty storage and transport case from the housing by means of an unloading device.

According to a third aspect, the present invention provides a storage and transport case used in a device and/or method for storing and dispensing components, in which said components are fastening elements of the type comprising a head and a stem, the total length of the component being greater than the maximum width of said head. The mentioned storage and transport case comprises a cavity which can completely house one of said components. At one end of the cavity there is arranged an inlet/outlet opening, sized to allow the component to enter and come out of said cavity, and at the other end there is arranged a fluid passage hole, sized to allow a transport fluid to pass into the cavity and to prevent the passage of the component. The storage and transport case is externally sized to be received in a housing associated to blowing means adapted to provide said transport fluid to the mentioned fluid passage hole for the purpose of driving the component out the storage and transport case through said inlet/outlet opening.

### Brief Description of the Drawings

The previous and other features and advantages will be more fully understood from the following detailed description of an exemplary embodiment with reference to the attached drawings, in which:
Figure 1 is a longitudinal sectional view of a storage and transport case according to an exemplary embodiment of the third aspect of the present invention, which is used in the device and the method for storing and dispensing components of the first and second aspects of the present invention, respectively;
Figures 2 to 4 are longitudinal sectional views of a storage and transport case according to another exemplary embodiment, housing different types of components;
Figure 5 is a perspective view of a portable storage unit forming part of the device of the present invention;
Figure 6 is a partially sectioned side elevational view of the portable storage unit of Figure 5, showing part of its interior;
Figure 7 is a lower view of the portable storage unit of Figure 5;
Figure 8 is an enlarged partial cross-sectional view taken along the plane indicated by line VIII-VIII of Figure 7;
Figure 9 is a side elevational view of movement means for moving an actuation member of the release mechanism for releasing a locking element, actuation means of a step-by-step selecting device and a sending unit;
Figure 10 is an upper view of the movement means of Figure 9, with a plurality of portable storage units shown in dotted lines;
Figures 11 to 13 are partially sectioned side elevational views showing a sequence of operations of the movement means in relation to a portable storage unit;
Figure 14 is a perspective view of the sending unit moved by the movement means;
Figure 15 is a longitudinal sectional view taken by a vertical mid-plane of the sending unit of Figure 14, with a storage and transport case, loaded with a component, received in a housing thereof;
Figure 16 is an upper view of the sending unit of Figure 14 with a storage and transport case received in the housing;
Figures 17 and 18 are schematic cross-sectional views of a housing of the sending unit and an unloading device of the housing in receiving and unloading positions, respectively;
Figure 19 is a perspective view showing different storage and dispensing modules integrating the device of the present invention, ready to be stacked in a column;
Figure 20 is a perspective view of the storage and dispensing modules of Figure 19 stacked in a column;
Figure 21 is a perspective view of a selecting device associated to each storage and dispensing module; and
Figure 22 is a side elevational view of the selecting device of Figure 21.

### Detailed Description of Exemplary Embodiments

The device and method for storing and dispensing components of the present invention is based on the use of a plurality of storage and transport cases to individually store and transport the components during several steps of the process.

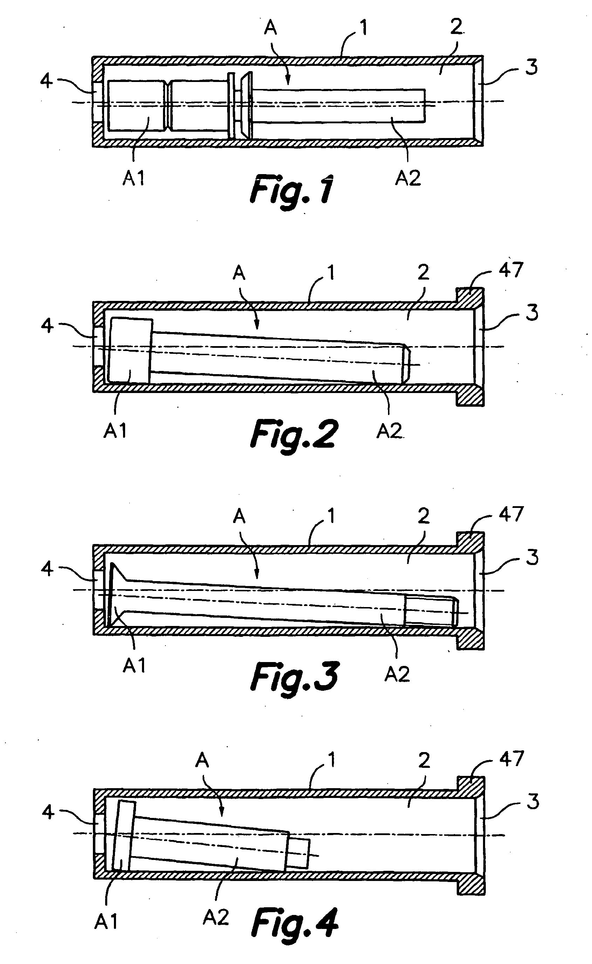

In relation to Figures 1 to 4, one of such storage and transport cases generally designated by reference numeral 1 is described below. The storage and transport case 1 comprises an elongated body defining a cavity 2 which can completely house one of said components A. The elongated body of the storage and transport case 1 has an inlet/outlet opening 3 at one end, sized to allow the component A to enter and come out of said cavity 2, and a fluid passage hole 4 at the other end, sized to allow a transport fluid to pass into the cavity 2. The mentioned fluid passage hole 4 is small enough to prevent the passage of component A.

The components A are for example, fastening elements such as rivets, nails, screws or the like, comprising a head A1 and a stem A2, and in which the total length of component A is greater than the maximum width of the head A1. As a guideline, the components have a ratio between total length and maximum head width of 1.2 or above. The body of the storage and transport case I preferably has a tubular-shaped revolution body about a longitudinal axis, and the cavity 2 is sized to comfortably house component A, substantially restricting a rotation of component A about a transverse axis. The inlet/outlet opening 3 and the fluid passage hole 4 are arranged at opposite longitudinal ends of the cavity 2. In the exemplary embodiments shown, the tubular body of the storage and transport case 1 is internally and externally cylindrical, and the diameter of the cavity 2 is equal to the diameter of the inlet/outlet opening 3, whereas the fluid passage hole 4 is formed in an end wall partially closing the end of the cylindrical body opposite to the inlet/outlet opening 3. Component A is always arranged with its head A1 adjacent to the end in which the fluid passage hole 4 is located.

In the exemplary embodiment shown in Figure 1, the outer surface of the tubular body of the storage and transport case 1 is completely smooth. In the exemplary embodiment shown in Figures 2, 3 and 4, the cylindrical body has a circumferential flange 47 extending outwardly adjacent to the inlet/outlet opening 3. This circumferential flange 47 does not play any role in the device and method of the present invention and its purpose is to cooperate with one or more elements of a device for handling and filling the storage and transport cases 1. In any case, the storage and transport case is externally sized to be received in a housing associated to blowing means adapted to inject the mentioned transport fluid to the mentioned fluid passage hole 4 for the purpose of driving component A out of the storage and transport case 1 through said inlet/outlet opening 3.

One and the same storage and transport case can house components of a variety of types and with a size range for each type. By way of example, component A has been shown in Figure 1 as a type of rivet that does not need a nut, used in aircraft construction, in Figure 2 as a DIN 912 type screw with a cylindrical head and hexagon socket, in Figure 3 as a rivet to be coupled to a nut, used in aircraft construction, and in Figure 4 as a rivet of a type used to in vehicle construction. The component shown in relation to the storage and transport case 1 of Figure 1 can obviously be housed in the storage and transport case 1 of Figures 2 to 4, and vice versa.

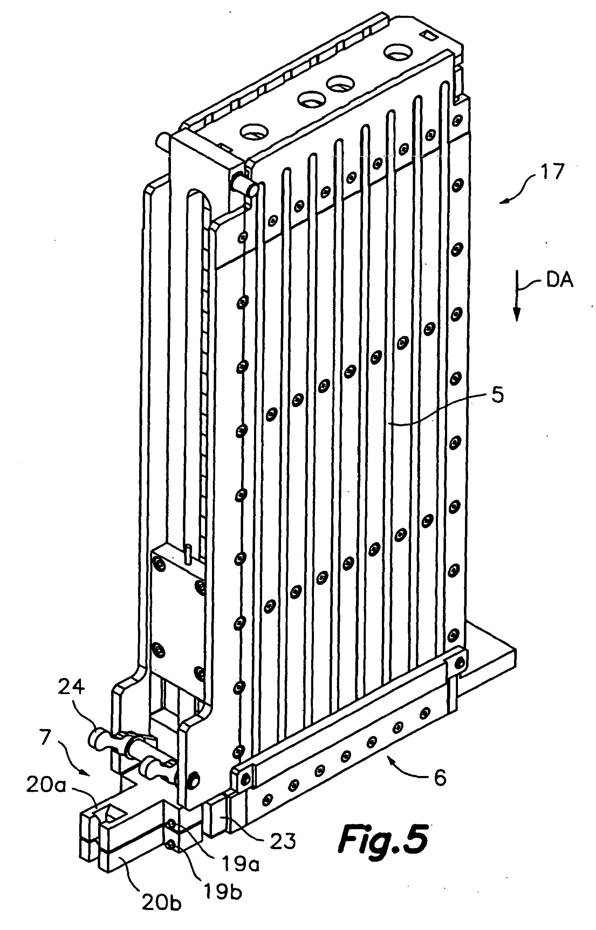

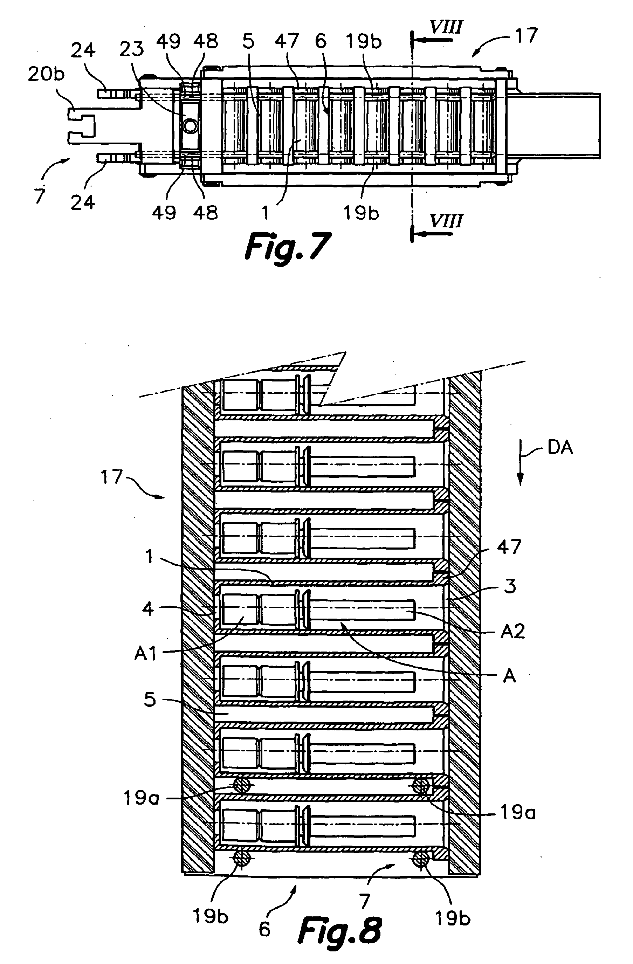

A portable storage unit 17 forming part of the device for storing and dispensing components of the present invention is described below in relation to Figures 5 to 8. The mentioned portable storage unit 17 comprises a number of storage elements 5, each of them adapted to house a number of said storage and transport cases 1 in a row, in mutual contact and pushed towards an outlet 6. A component A is housed inside each of said storage and transport cases 1. Each of said storage elements 5 is configured to substantially restrict the movements of the storage and transport cases 1 therein except in a forward movement direction (indicated by arrow DA) towards the outlet 6 and in the opposite direction. The storage and transport cases 1 are arranged in the storage element 5 transversely to said forward movement direction DA towards the outlet 6 and all of them with said inlet/outlet opening 3 facing one and the same side (Figure 8). The storage elements 5 are advantageously rectilinear and when the portable storage unit 17 is placed in an operative position in the device, the storage elements 5 adopt a substantially vertical arrangement, with the outlet 6 at their lower end. The storage and transport cases 1 are thus permanently pushed towards the outlet 6 by gravity.

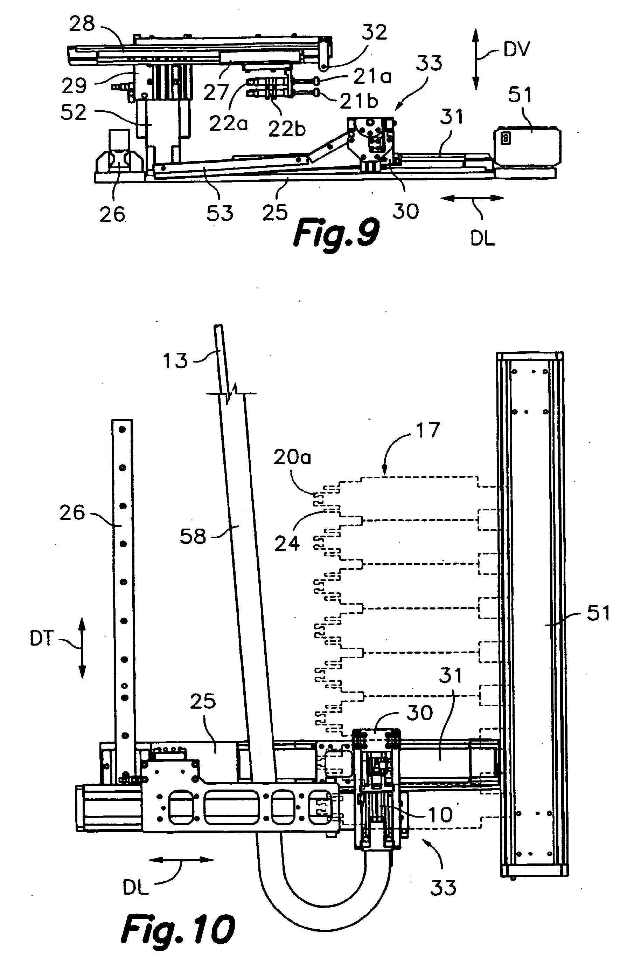

The device for storing and dispensing components includes a step-by-step selecting device 7 which allows the storage and transport cases 1 contained in each of the storage elements 5 to pass one by one through the outlet 6. In the exemplary embodiment shown, each of said portable storage units 17 includes mobile selecting members forming part of said step-by-step selecting device 7. These selecting members are in the form of a pair of upper rods 19a and a pair of lower rods 19b mounted in a sliding manner in a direction transverse to the forward movement direction DA and parallel to said row of outlets. The pairs of upper and lower rods 19b, 19b are separated from one another in the forward movement direction DA a sufficient distance for housing a storage and transport case 1 therebetween, as best shown in Figure 8. The pair of upper rods 19a supports the entire column of storage and transport cases 1 housed in the storage element 5, except the lower storage and transport case 1, which is supported by the pair of lower rods 19b. A single first rod and/or a single second rod in the form of a wide band would obviously give an equivalent result. The pair of upper rods 19a and the pair of lower rods 19b are connected to blocks defining respective coupling configurations 20a, 20b adapted to be coupled to corresponding upper and lower coupling configurations 21a, 21b provided in actuation means 22a, 22b of the step-by-step selecting device 7, which means are mounted on a structure 18, as explained below in relation to Figures 9 to 13. Figure 7 shows the shape of the lower coupling configuration 20b connected to the pair of lower rods 19b. The upper coupling configuration 20a connected to the pair of upper rods 19a is similar, and cannot be seen in Figure 7 because it is in an aligned position with the lower coupling configuration 20b and is hidden by same.

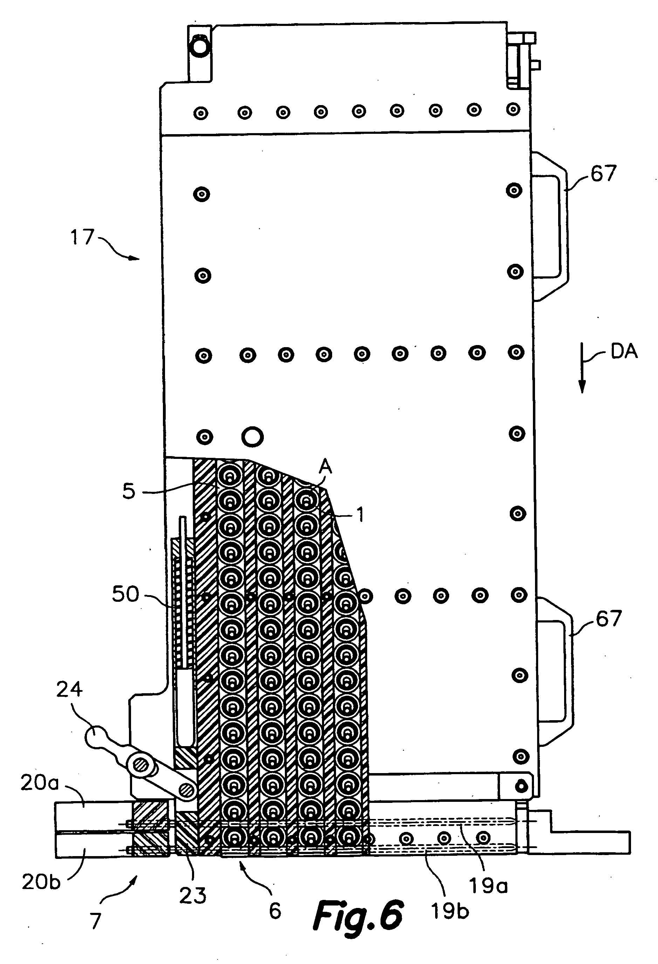

Each portable storage unit 17 further includes a locking element 23 adapted to lock said selecting members in a shutting position in which all the outlets 6 of the row of outlets are shut, as shown in Figures 6 and 7. The mentioned locking element 23 is mounted in a sliding manner in a direction parallel to the forward movement direction DA, and comprises grooves 48 (Figure 7) adapted to receive the insertion of narrowed portions 49 of the upper and lower rods 19a, 19b. The locking element 23 is linked to a release mechanism actuated by an actuation member 24 to release the selecting members. In the exemplary embodiment shown, the mentioned actuation member 24 adopts the form of a dual lever connected at one end to the locking element 23 and in a mid-area to the body of the portable storage unit 17. Elastic means, such as one or more compression coil springs 50 (Figure 6), are arranged to permanently push the locking element 23 towards a locking position, in which said locking element 23 locks the pairs of upper and lower rods 19a, 19b in a shutting position in which all the outlets 6 are shut. When said actuation member 24 is actuated downwards, the mentioned release mechanism moves the locking element 23 upwards against the thrust of the elastic means 50 to a releasing position, in which the first and second rods 19a, 19b are free to be moved by the actuation means 22a, 22b of the step-by-step selecting mechanism 7. The actuation member 24 is adapted and arranged to be actuated by a pushing member 32 linked to actuation means mounted on said structure 18, as explained below.

Each portable storage unit 17 advantageously adopts the form of a suitcase provided with one or more handles 67 to facilitate its transport, and two or more different types of portable storage units 17 adapted for components A within two or more size ranges have been provided.

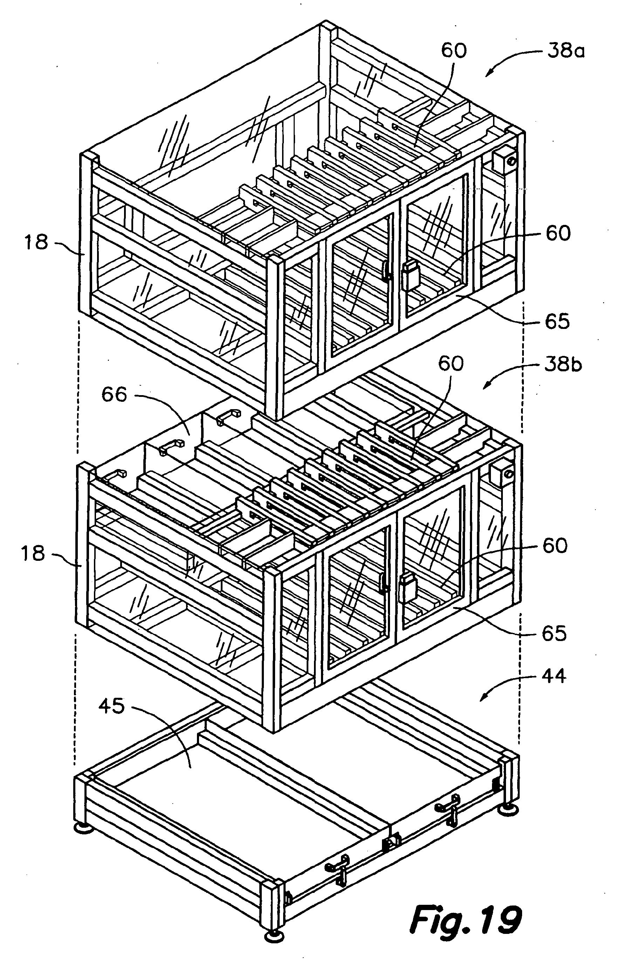

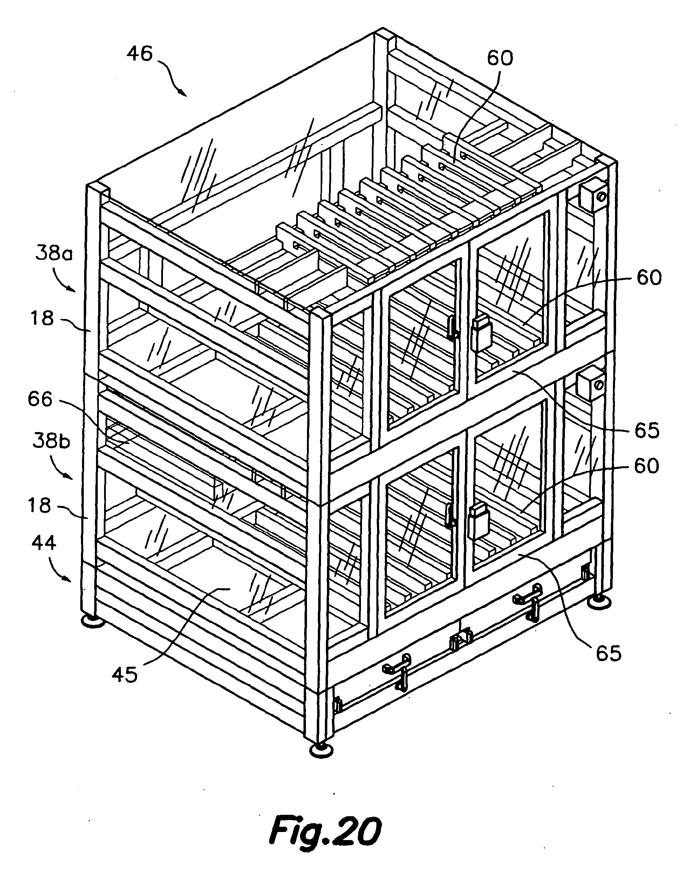

Figures 19 and 20 show the mentioned structure 18 supporting the device for storing and dispensing components of the present invention. This structure 18, which will be described in more detail below, is adapted to receive a plurality of portable storage units 17, each of which includes, as described above, a number of said storage elements 5 with their outlets 6 aligned in a row. When the portable storage units 17 are operatively placed in the structure 18, all the rows of outlets of the portable storage units 17 are parallel to one another and are arranged in one and the same plane perpendicular to the forward movement direction DA of the storage elements 5, and preferably such that the outlets 6 form a matrix of outlets. Each portable storage unit 17, when it is operatively placed in said structure 18, is filled with storage and transport cases 1 loaded with a predetermined type of components A. The storing and dispensing device is adapted to dispense said components one by one. When a portable storage unit 17 has been emptied, it can be removed from the structure 18 to refill it and replace it with another full unit. It must be indicated, however, that the portable storage units 17 are not essential for the storing and dispensing device of the present invention. For example, a number of said storage elements 5 containing storage and transport cases 1 loaded with different types of components A could be arranged in the structure 18, preferably with each storage element 5 containing components A of one and the same type, and with all the outlets 6 of the storage elements 5 arranged in one and the same plane, forming a matrix.

In the structure 18, there are arranged movement means adapted to move the actuation means 22a, 22b of the step-by-step selecting device 7, the mentioned pushing member 32 adapted to push the lever 24 of the release mechanism of the locking element 23, and a sending unit 33, to a suitable place to act in relation to a selected portable storage unit 17 containing a selected type of components A, and in relation to the outlet 6 of a selected storage element 5 of the selected portable storage unit 17.

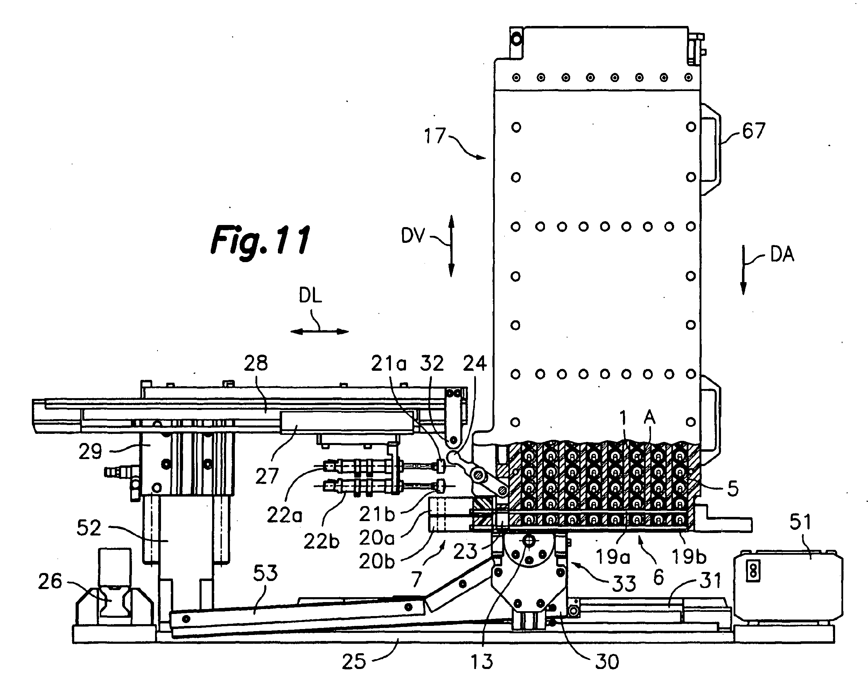

In relation to Figures 9 to 13, the mentioned movement means are described below. For greater clarity of the drawing, the structure 18 is not shown in Figures 9 to 13. The portable storage units 17 are shown by means of dotted lines in their mutually adjacent operative positions in the plan view of Figure 10, and a partially sectioned portable storage unit 17 interacting with the devices associated to the movement means is shown in side views of Figures 11 to 13.

The movement means basically comprise a first carriage 25 mounted such that it can be moved by driving means, such as a first linear motor 51, along a first guide device 26 joined to the structure 18. The first linear motor 51, due to its construction, also includes part of the first guide device 26. This first guide device 26 is arranged in a transverse direction DT perpendicular to the rows of outlets of the portable storage units 17 and parallel to the plane in which such units are arranged. On the mentioned first carriage 25, there is mounted a second carriage 27 adapted to be moved by driving means along a second guide device 28 arranged in a longitudinal direction DL parallel to the rows of outlets. The second guide device 28 is integrated in the driving means formed by a second linear motor. The mentioned second guide device 28 is connected to the first carriage 25 by means of a vertical guide device 29 mounted on a column 52 fixed to the first carriage 25, driving means, such as a linear actuator integrating said vertical guide device 29, are arranged to move the second guide device 28 along the vertical guide device 29 in a vertical direction DV parallel to the forward movement direction DV of the storage elements 5 of the portable storage units 17. On the first carriage 25, there is fixed a third guide device 31 arranged in said longitudinal direction DL, and a third carriage 30 is adapted to be moved by driving means along the third guide device 31. The mentioned third guide device 31 and the driving means are advantageously integrated in a linear motor.

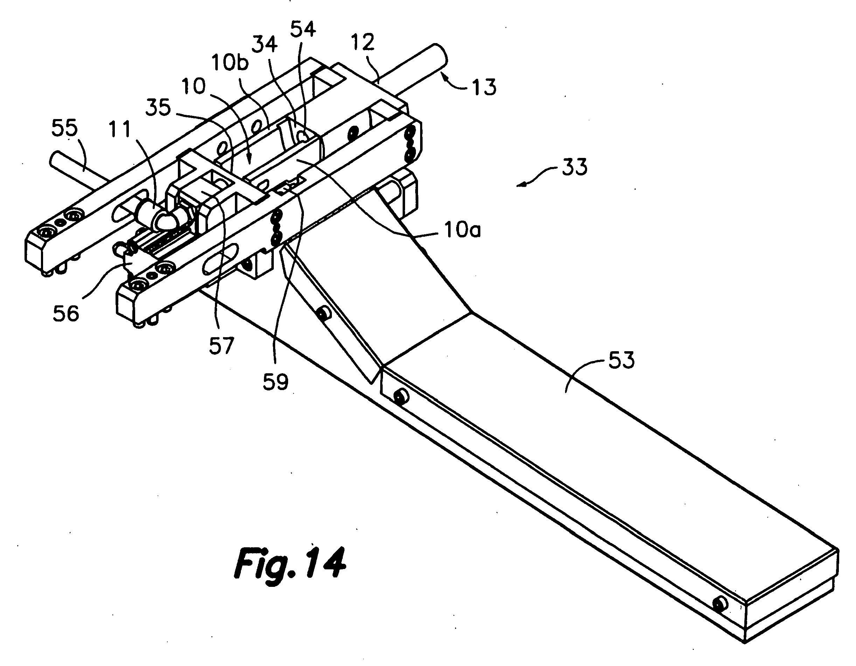

The mentioned actuation means 22a, 22b of the step-by-step selecting device 7 are mounted on the second carriage 27, thereby they are provided with the capacity to move in the mentioned transverse DT, longitudinal DL and vertical DV directions. The pushing member 32 is mounted on a fixed position in relation to the second guide device 28, projecting from a front lower end thereof, thereby it is provided with the capacity to move in the transverse DT and vertical DV directions. The mentioned sending unit 33, which is described in detail below in relation to Figures 14 to 18, is mounted on the third carriage 30, thereby it is provided with the capacity to move in the transverse DT and longitudinal DL directions.

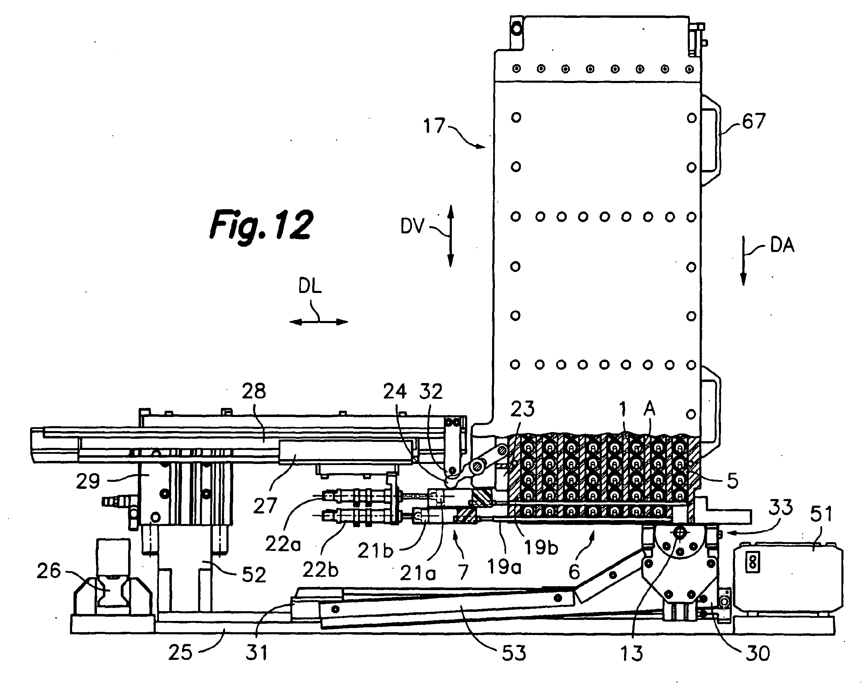

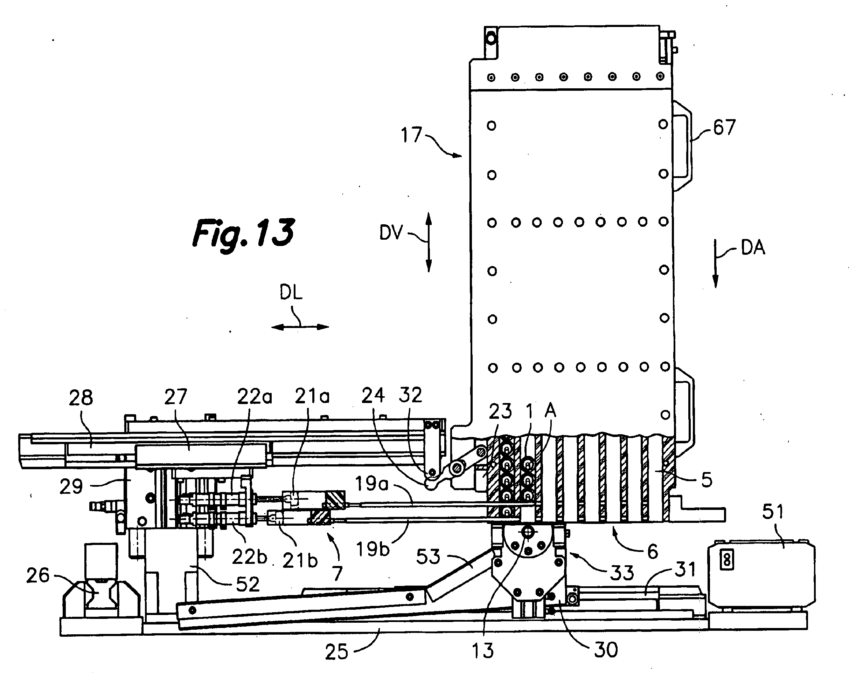

The operation of the step-by-step selecting device 7 is described below in relation to Figures 11 to 13. The actuation means 22a, 22b of the step-by-step selecting device 7 comprise respective pneumatic cylinders the bodies of which are fixed to the second carriage 27, and the mentioned upper and lower coupling configurations 21a, 21b are fixed at the ends of stems of the upper and lower pneumatic cylinders, respectively. The upper and lower coupling configurations 21a, 21b are adapted to be coupled with and uncoupled from the corresponding coupling configurations 20a, 20b connected to the first and second rods 19a, 19b by a movement of the upper and lower coupling configurations 21a, 21b together with the second guide device 28 in the vertical direction DV between coupled (Figure 11) and uncoupled (Figures 12 and 13) positions. The pushing member 32 is configured and arranged for the purpose of engage and disengage the actuation member 24 of the locking element 23 release mechanism of the portable storage unit 17 by a movement of the actuation member 24 together with the second guide device 28 in the vertical direction DV between said coupled and uncoupled positions.

Each portable storage unit 17 has an electronically readable label containing information about the number of storage elements 5 included in the portable storage unit 17, the number of storage and transport cases 1 stacked in each storage element 5 and the type of components A housed in the storage and transport cases 1. In a suitable place of the movement means 25, 27, 29, 30 installed in the structure 18, there are arranged reading means (not shown) adapted to read said label in connection with an electronic control system adapted to control the driving means of the movement means according to the information read from the label. When said electronic control system receives a requirement for dispensing a specific type of a component A, the electronic control system generates an order to activate the first linear motor 51 for the purpose of moving the first carriage 25 along the first guide device 26 until being located in an operative position in relation to a selected portable storage unit 17 containing the required type of components A. The selected portable storage unit 17 is identified previously or during the movement of the first carriage 25 by means of reading its label.

Figure 11 shows the selected portable storage unit 17 completely filled with storage and transport cases 1 loaded with the required type of components A and the pairs of upper and lower rods 19a, 19b are completely inserted, shutting all the outlets 6 of the storage elements 5 of the portable storage unit 17. The second guide device 28 is in the uncoupled position, i.e., in a raised position, in which the pushing member 32 is above the actuation member 24 of the release mechanism of the portable storage unit 17 and in which the upper and lower coupling configurations 21a, 21b of the actuation means 22a, 22b of the step-by-step selecting device 7 are located above and aligned with the coupling configurations 20a, 20b connected respectively to the pairs of upper and lower rods 19a, 19b in cooperation with a suitable position of the second carriage 27 in relation to the second guide device 28.

From the position shown in Figure 11, an activation of the driving means associated to the vertical guide device 29 moves the second guide device 28 to the coupled position, i.e., a lowered position shown in Figures 12 and 13, whereby the upper and lower coupling configurations 21 a, 21 b of the actuation means 22a, 22b of the step-by-step selecting device 7 are coupled to the coupling configurations 20a, 20b, respectively, and at the same time, the pushing member 32 pushes the actuation member 24 of the release mechanism downwards, thereby the locking element 23 is lifted against the elastic force of the springs 50 and the mentioned grooves 48 formed in the locking element 23 are uncoupled from the narrowed portions 49 provided in the upper and lower rods 19a, 19b (see also Figures 6 and 7). With this maneuver, the upper and lower rods 19a, 19b are free to be moved by the actuation means 22a, 22b.

In the position shown in Figure 12, an activation of the driving means associated to the third guide device 31 move the third carriage 30 until locating the sending unit 33 in an operative position in relation to the outlet 6 of the first storage element 5 of the selected portable storage unit 17. An activation of the lower pneumatic cylinder 22b of the actuation means of the step-by-step selecting device 7 then removes the pair of lower rods 19b to their clearing position to free the passage through the opening 6 and thus allow the storage and transport case 1 located in the lower position of the stack and loaded with a component A to fall through the outlet 6 while the pair of upper rods 19a remain in the shutting position retaining the rest of the stack of storage and transport cases 1 loaded with components A above the outlet 6. The storage and transport case 1 loaded with a component A released through the outlet 6 of the portable storage unit 17 is received in the sending unit 33, which is adapted to send the component A through the inside of a transport tube 13 and eject the empty storage and transport case 1 through an unloading conduit 53.

The operation of the step-by-step selecting device 7 comprises activating the actuation means 22a, 22b to alternately move the pairs of upper and lower rods 19a, 19b between their shutting and clearing positions such that when the pair of upper rods 19a is in the shutting position, the pair of lower rods 19b is the clearing position, and vice versa, preferably intercalating a situation in which both pairs of upper and lower rods 19a, 19b are in the shutting position between the alternate shutting/clearing situations.

Thus, if required, successive activations of the actuation means 22a, 22b to move the upper and lower rods 19a, 19b between their shutting and clearing positions without altering the position of the second carriage 27 in relation to the second guide device 28 will allow the storage and transport cases 1 loaded with components A to selectively fall one by one through the outlet 6 until finishing the entire stack of the first storage element 5 of the portable storage unit 17. In the event that components A of the type loaded in the same portable storage unit 17 are still required, an activation of the driving means associated to the second guide device 28 will move the second carriage 27, dragging the upper and lower rods 19a, 19b to a suitable position to act in relation to the outlet 6 of the following storage element 5 of the selected portable storage unit 17, and a corresponding activation of the driving means associated to the third guide device 31 will move the third carriage 30 to locate the sending unit 33 under this same outlet 6 of the following storage element 5, and so on.

In the situation shown in Figure 13, the sending unit is operatively located under the outlet 6 of the penultimate storage element 5 of the portable storage unit 17, the second carriage 27 is suitably located with respect to the second guide device 28 to located the pairs of upper and lower rods 19a, 19b in an operative position to act in relation to this same outlet 6 of the penultimate storage element 5 and the pair of upper rods 19a only retain three storage and transport cases 1 loaded with components A in the stack inside the penultimate storage element 5.

If a different component A, loaded in another of the portable storage units 17 installed in the structure 18, is required after removing a storage and transport case 1 from any one of the storage elements 5 of the selected portable storage unit 17, an activation of the driving means associated to the second guide device 28 will move the second carriage 27 to drag the pairs of upper and lower rods 19a, 19b back to the completely inserted position, a subsequent activation of the driving means associated to the vertical guide device 29 will lift the pushing member 32 to its uncoupled position from the actuation member 24 of the release mechanism of the portable storage unit 17, whereby the pairs of upper and lower rods 19a, 19b will be locked in the shutting position, and at the same time it will lift the second guide device 28 to its uncoupled position, and thus the upper and lower coupling configurations 21a, 2 1 b of the actuation means 22a, 22b of the step-by-step selecting device 7 will be uncoupled from the coupling configurations 20a, 20b connected to the pairs of upper and lower rods 19a, 19b. The first linear motor 51 will then be activated to move the first carriage 25 along the first guide device 26 until being located in an operative position in relation to the portable storage unit 17 containing the new required type of components A, according to the reading of the labels. To remove the storage and transport cases 1 loaded with components A, the storing and dispensing device will act in relation to the newly selected portable storage unit 17 in a manner similar to that described above.

It will be understood that the removal of storage and transport cases 1 loaded with components A is sequential from the lower storage and transport case 1 to the upper one of the stack in each storage element 5 and sequential from the first storage element 5 to the last one in each portable storage unit 17. The electronic control system is able to memorize the information read in the label of each portable storage unit 17 and to count the number of storage and transport cases 1 removed from each portable storage unit 17. Consequently, the electronic control system "knows" at all times the exact situation of the following storage and transport case 1 to be removed from each portable storage unit 17. When a newly required type of component A is in a partially empty portable storage unit 17, the electronic control system acts, once the first carriage 25 is located in relation to the selected portable storage unit 17 and once the actuation member 24 and the upper and lower coupling configurations 21a, 21b are coupled, to move the second carriage 27 along the second guide device 28 until locating the pairs of upper and lower rods 19a, 19b in an operative position to act in relation to the outlet 6 of the storage element 5 in which the following storage and transport case 1 to be removed is located.

The composition and the operation of the sending unit 33 are described below in relation to Figures 14 to 18. The sending unit 33 comprises a housing 10 adapted to receive by gravity and support a storage and transport case 1 loaded with a component A from one of the outlets 6 of one of the portable storage units 17. The mentioned housing 10 is associated to blowing means adapted to provide the transport fluid to the mentioned fluid passage hole 4 for the purpose of driving the component A out of the storage and transport case 1 through its inlet/outlet opening 3 and into a transport tube 13. The sending unit includes an unloading device adapted to unload the empty storage and transport case 1 from the housing 10 through an unloading conduit 53.

Figure 14 separately shows the sending unit 33, the housing 10 of which is in the form of a cradle defined by side walls, a bottom, a front wall 34 in which there opens up a passageway 54 communicated with the inlet end 12 of the mentioned transport tube 13 and a rear wall 35 in which there opens up an outlet hole of a blowing nozzle 11. This blowing nozzle 11 is connected through a conduit 55 to means for supplying the pressurized transport fluid, which can be compressed air. The fall conduit 53 includes an elongated ramp finished in a downward facing outlet (not shown) to make the unloaded storage and transport cases 1 fall from the housing 10 into a collection site.

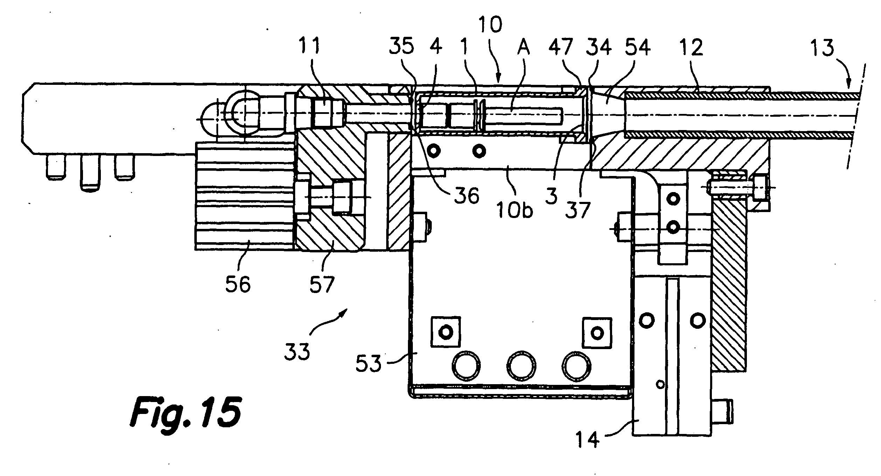

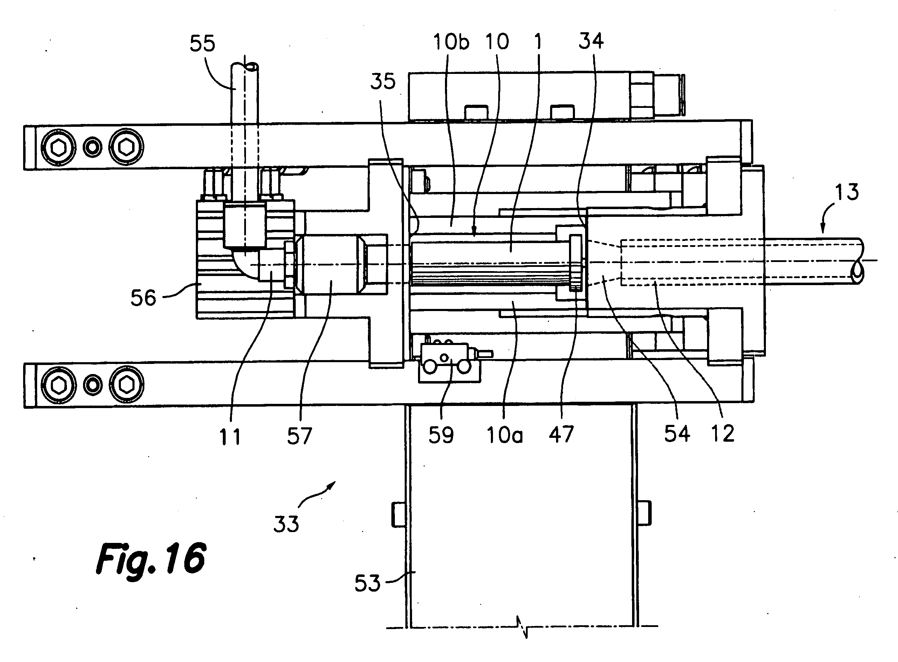

As shown in Figures 15 and 16, the housing 10 is adapted to receive the storage and transport case 1 loaded with the component A with the fluid passage hole 4 facing the blowing nozzle 11 and the inlet/outlet opening 3 facing the inlet end 12 of the transport tube 13. The sending unit 33 further comprises means for locking the storage and transport case 1 in the housing 10 during a sending operation for sending the component A by blowing. To that end, the blowing nozzle 11 is mounted on a mobile part 57 connected to movement means, such as a pneumatic cylinder 56 for example, adapted to move the blowing nozzle 11 in an axial direction in relation to the housing 10 and against the storage and transport case 1. When the mobile part 57 is in a receiving position (Figure 15), the mentioned rear wall 35 of the housing 10 is at a sufficient distance from the front wall 34 to allow the storage and transport case 1 to enter the housing 10 when it falls by gravity from the outlet 6 and its accommodation with looseness in the housing 10. When the mobile part 57 is then moved to a locking position (not shown), the rear wall 34 makes contact and drags the storage and transport case 1 until it is axially trapped between the front wall 34 and the rear wall 35 of the housing 10.

To ensure the tightness between the rear wall 35 and the storage and transport case 1 and between the storage and transport case 1 and the front wall 34 of the housing 10 when the blowing nozzle 11 is in said locking position, a first sealing gasket 36 is installed around said outlet hole of the blowing nozzle 11 in the rear wall 35 and a second sealing gasket 37 is installed around the passageway 54 communicating with the inlet end 12 of the transport tube 13 in the front wall 34. Thus, when the blowing nozzle 11 is in the locking position, a supply of transport fluid through the blowing nozzle 11 to the inside of the storage and transport case 1 entrains the component A out of the storage and transport case 1 and into the transport tube 13, while the empty storage and transport case 1 is retained in the housing 10. The sending unit 33 preferably incorporates a sensor 59, such as an inductive sensor (Figures 14 and 16), arranged to detect the presence of a storage and transport case 1 in the housing 10 and to send a signal representative of such detection to the electronic control system so that it orders the necessary sequence of operations to send the component A through the transport tube 13, which can be installed inside a protective chain 58 (schematically shown in Figure 10).

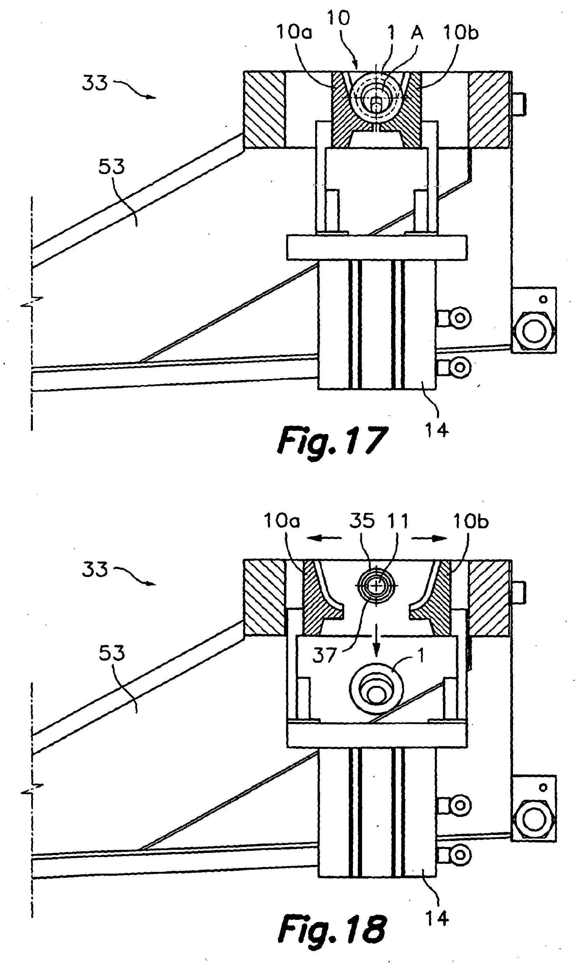

Figures 17 and 18 show the unloading device, comprising two mobile parts 10a, 10b, each of which defines one of said side walls and a portion of the mentioned bottom of the housing 10. The side walls of the housing 10 are inclined to ensure a good reception and centering of the storage and transport case 1 when it falls by gravity from the outlet 6 of the portable storage unit 17. The two mobile parts 10a, 10b are connected to movement means, such as a pneumatic clamp 14, to move the two mobile parts 10a, 10b between a receiving position (Figure 17), in which the two mobile parts 10a, 10b together define the housing to receive and support the storage and transport case 1 loaded with a component A, and an unloading position (Figure 18), in which the two mobile parts 10a, 10b are separated a sufficient distance to form an opening through which the fall by gravity of the empty storage and transport case 1 towards the unloading conduit 53 is facilitated.

With reference now to Figures 19 and 20, the storing and dispensing device of the present invention is designed to form a plurality of storage and dispensing modules 38a, 38b which can be stacked in a column and/or can be laterally attached in a row to form one or more storage and dispensing units 46. Figure 19 shows two of said storage and dispensing modules 38a, 38b and a base module 44 before being assembled. Figure 20 shows the two storage and dispensing modules 38a, 38b and the base module 44 assembled forming one of the mentioned storage and dispensing units 46.

Each storage and dispensing module 38a, 38b is formed from the mentioned structure 18, which incorporates a plurality of anchoring devices 60 adapted to operatively receive a number of portable storage units 17. Although they have not been shown in Figures 19 and 20, the actuation means 22a, 22b of the step-by-step selecting device 7, the pushing member 32 for the actuation member 24 of the locking element 23, and the sending unit 33 are also arranged in the structure 18, all of them mounted on the corresponding movement means as described above. Thus, each storage and dispensing module 38a, 38b includes everything necessary to house a number of portable storage units 17 and to selectively remove one or more storage and transport cases 1 from a selected outlet 6 of a selected portable storage unit 17 and to send by blowing the components A of the storage and transport cases 1 removed through the transport tube 13.

As explained above, each portable storage unit 17 includes a number of storage elements 5 containing storage and transport cases 1 loaded with a specific type of components A, and the portable storage units 17 installed in one and the same storage and dispensing module 38a, 38b can contain different types of components A within one and the same size range. Given that there may be two or more different types of portable storage units 17 adapted for components A of different size ranges, two or more different types of storage and dispensing modules 38a, 38b adapted to house portable storage units 17 with different configurations and dispense components A of different size ranges can be constructed. Consequently, one and the same storage and dispensing unit 46 formed by two or more different types of storage and dispensing modules 38a, 38b to house two or more different types of portable storage units 17 will have the capacity to supply a great variety of components A having a great variety of sizes.

The storage and dispensing modules 38a, 38b include doors 65 providing access to the anchoring devices 60 to allow placing and removing the portable storage units 17. The unloading device of each storage and dispensing module 38a, 38b is adapted to eject the empty storage and transport cases 1 through an open bottom of the storage and dispensing module 38a, 38b, which cases are collected in receptacles 66, such as in the form of drawers for example, provided in the storage and dispensing module 38b immediately below a column of modules. The uppermost storage and dispensing module 38a in a stack of the storage and dispensing unit 46 is not provided with receptacles, and the lowermost storage and dispensing module 38b is arranged on the mentioned base module 44, which is provided with one or more receptacles 45, in the form of drawers for example, to collect the storage and transport cases 1 unloaded by the unloading device of this lowermost storage and dispensing module 38b. If necessary, one or more storage and dispensing modules provided with receptacles 66 could be arranged between the two upper and lower storage and dispensing modules 38a, 38b shown in the stack of the storage and dispensing unit 46. The drawers forming the mentioned receptacles 45, 66 are provided with handles and can be removed to receive the empty storage and transport cases 1.

The storage and dispensing modules 38a, 38b and the base module 44 have preferably transparent closing panels, arranged so that, once the storage and dispensing modules 38a, 38b are assembled, all the sides of the storage and dispensing unit 46 are protected by such closing panels. Thus, for example, in Figures 19 and 20, all the sides of the upper storage and dispensing module 38a are covered by closing panels, except its lower face, all of the sides of the lower storage and dispensing module 38b are covered by closing panels, except its upper and lower faces, and all the sides of the base module 44 are covered by closing panels, except its upper face.

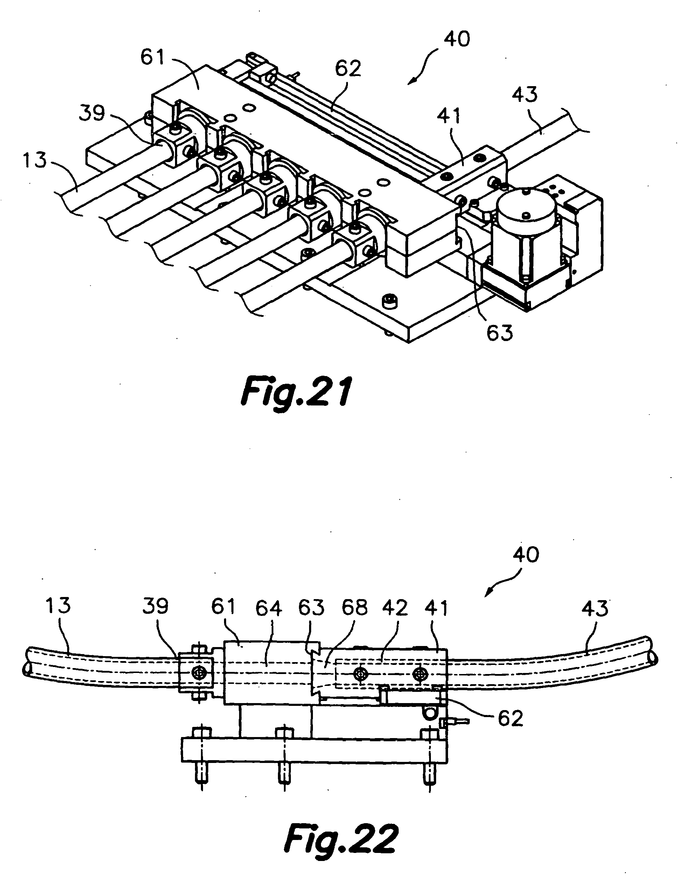

In relation now to Figures 21 and 22, each storage and dispensing module 38a, 38b has its own transport tube 13 through which the components A are dispensed. For the purpose of unifying the exit of components from the storage and dispensing unit 46 in a single general transport tube 43, the transport tube 13 of each storage and dispensing module 38a, 38b of the storage and dispensing unit 46 has an outlet end 39 connected to a fixed support 61 of the selecting device 40. The mentioned fixed support 61 includes a number of passageways 64 communicated with the outlet ends 39 of the transport tubes 13 and open in a surface of the fixed support 61 in aligned adjacent positions. The selecting device 40 comprises a selecting element 41 connected to an inlet end 42 of said general transport tube 43 and arranged to be moved by driving means along a guide device 63 for the purpose of selectively aligning and communicating the inlet end 42 of the general transport tube 43 with any one of the mentioned passageways 64 in communication with the outlet ends 39 of the transport tubes 13. In the exemplary embodiment shown, the guide device 63 comprises a dovetail rail formed in the fixed support 61 and at the bottom of which the passageways 64 open up, and a conjugate-shaped runner formed in the selecting element 41 on either side of the opening of a passageway 68 communicating with the inlet end 42 of said general transport tube 43. The driving means comprise a stem-free actuator 62.

A person skilled in the art will be able to carry out modifications and variations from the exemplary embodiments shown and described without departing from the scope of the present invention as it is defined in the attached claims.

## Claims

1. A device for storing and dispensing components, said components (A) being fastening elements of the type comprising a head (A1) and a stem (A2), the total length of the component (A) being greater than the maximum width of said head (A1), wherein the device is **characterised by** comprising:
a plurality of storage and transport cases (1), each of which comprises a cavity (2) which can completely house one of said components (A), with an inlet/outlet opening (3) at one end, sized to allow the component (A) to enter in/come out from said cavity (2), and a fluid passage hole (4) at an opposite end sized to allow a transport fluid to pass into the cavity (2) and to prevent the passage of the component (A);
at least one storage element (5) adapted to house a number of said storage and transport cases (1), comprising an outlet (6) towards which said storage and transport cases (1) can be pushed with a component (A) housed in each of them (1);
a step-by-step selecting device (7) to allow said storage and transport cases (1) to pass at least one by one through said outlet (6);
a housing (10) adapted to support at least one storage and transport case (1) loaded with a component (A) coming from the outlet (6), said housing (10) being associated with blowing means adapted to provide said transport fluid to the mentioned fluid passage hole (4) for the purpose of driving the component (A) out from the storage and transport case (1) through said inlet/outlet opening (3) and into a transport tube (13); and
an unloading device (53) adapted to unload the empty storage and transport case (1) from the housing (10).

2. A device according to claim 1, **characterized in that** said storage element (5) is configured to substantially restrict the movements of the storage and transport cases (1) therein except in a forward movement direction (DA) towards the outlet (6) and in the opposite direction, the storage and transport cases (1) being arranged in the storage element (5) in a row, in mutual contact, transversely to said forward movement direction (DA) towards the outlet (6) and all of them with said inlet/outlet opening (3) facing one and the same side.

3. A device according to claim 2, **characterized in that** the storage element (5) adopts a substantially vertical arrangement with the outlet (6) at its lower end, the storage and transport cases (1) being permanently pushed towards the outlet (6) by gravity.

4. A device according to claim 3, **characterized in that** it comprises a structure (18) in which there are arranged a number of said storage elements (5) containing storage and transport cases (1) loaded with different types of components (A), wherein each storage element (5) contains one and the same type of components (A), there being arranged in said structure (18) movement means for moving at least some components of said step-by-step selecting device (7), the housing (10), a blowing nozzle (11) of the blowing means, at least one inlet end (12) of said transport tube (13) and said unloading device to a suitable site to act in relation to the outlet (6) of a storage element (5) containing a selected type of components (A).

5. A device according to claim 4, **characterized in that** said structure (18) is adapted to receive a plurality of portable storage units (17), each of which includes a number of said storage elements (5) with their outlets (6) aligned in a row, each portable storage unit (17) being adapted to be filled with storage and transport cases (1) loaded with a predetermined type of components (A), operatively placed in said structure (18), and removed from the structure (18) to refill it.

6. A device according to claim 5, **characterized in that** each of said portable storage units (17) comprises mobile selecting members forming part of said step-by-step selecting device (7), said selecting members including respective coupling configurations (20a, 20b) adapted to be coupled to corresponding coupling configurations (21a, 21b) provided in actuation means (22a, 22b) of the step-by-step selecting device (7) mounted on the structure (18) when the portable storage unit (17) is operatively placed in the structure (18).

7. A device according to claim 6, **characterized in that** each portable storage unit (17) includes a locking element (23) adapted to lock said selecting members in a shutting position in which all the outlets (6) of the row of outlets are shut, said locking element (23) being linked to a release mechanism actuated by an actuation member (24) to release the selecting members, said actuation member (24) being adapted and arranged to be actuated by a pushing member (32) linked to actuation means mounted on the structure (18) when the portable storage unit (17) is operatively placed in the structure (18).

8. A device according to claim 7, **characterized in that** said selecting members are in the form of at least one first rod (19a) and at least one second rod (19a) mounted in a sliding manner in a direction parallel to said row of outlets and separated from one another in the forward movement direction (DA) a sufficient distance to house at least one storage and transport case (1) therebetween, said actuation means (22a, 22b) of the step-by-step selecting device (7) being adapted to alternately move said first and second rods (19a, 19b) between said shutting position and a clearing position suitable to clear the passage of the storage and transport cases (1) through a selected outlet (6), such that when the first rod (19a) is in said shutting position the second rod (19b) is in the clearing position, and vice versa.

9. A device according to claim 8, **characterized in that** said locking element (23) is permanently pushed by elastic means towards a locking position, in which said locking element (23) locks the first and second rods (19a, 19b) in a shutting position in which all the outlets (6) are shut, said release mechanism being adapted to move, when said actuation member (24) is actuated, the locking element (23) against the thrust of said elastic means to a releasing position, in which the first and second rods (19a, 19b) are free to be moved.

10. A device according to claim 7, **characterized in that** the rows of outlets of all the portable storage units (17) operatively placed in the structure (18) are parallel to one another and are in one and the same plane perpendicular to the forward movement direction (DA) of the storage elements (5).

11. A device according to claim 10, **characterized in that** said actuation means (22a, 22b) of the step-by-step selecting device (7) are associated to a first carriage (25) adapted to be moved by driving means along a first guide device (26) joined to the structure (18) and arranged in a transverse direction (DT) perpendicular to the rows of outlets and parallel to the plane thereof to locate the actuation means (22a, 22b) of the step-by-step selecting device (7) in an operative position to interact with the first and second rods (19a, 19b) of the step-by-step selecting device (7) of a selected portable storage unit (17).

12. A device according to claim 11, **characterized in that** said actuation means (22a, 22b) of the step-by-step selecting device (7) are mounted on a second carriage (27) adapted to be moved by driving means along a second guide device (28) mounted on said first carriage (25) and arranged in a longitudinal direction (DL) parallel to the rows of outlets to locate the actuation means (22a, 22b) of the step-by-step selecting device (7) in an operative position to interact with the first and second rods (19a, 19b) operatively placed in relation to a selected outlet (6) of the row of outlets of said selected portable storage unit (17).

13. A device according to claim 12, **characterized in that** said coupling configurations (21a, 21b) of the actuation means (22a, 22b) of the step-by-step selecting device (7) are adapted to be coupled with and uncoupled from the corresponding coupling configurations (20a, 20b) of the first and second rods (19a, 19b) by a vertical movement of the second guide device (28) between coupled and uncoupled positions, driving means being arranged to move the second guide device (28) along a vertical guide device (29) mounted on said first carriage (25) between said coupled and uncoupled positions.

14. A device according to claim 13, **characterized in that** said pushing member (32) is fixed in a support of the second guide device (28) in a suitable position to engage and disengage the actuation member (24) of the release mechanism of the locking element (23) of said selected portable storage unit (17) when the second guide device (28) carries out said vertical movement between said coupled and uncoupled positions.

15. A device according to claim 14, **characterized in that** the housing (10), said blowing nozzle (11), which is connected to means for supplying the pressurized transport fluid, said inlet end (12) of the transport tube (13) and the unloading device are integrated in a sending unit (33) mounted on a third carriage (30) adapted to be moved by driving means along a third guide device (31) joined to the first carriage (25) and arranged in said longitudinal direction (DL) to locate said sending unit (33) in an operative position to act in relation to a selected outlet (6) of the row of outlets of the selected portable storage unit (17).

16. A device according to claim 15, **characterized in that** the housing (10) is the form of a cradle defined by side walls, a bottom, a front wall (34), in which there opens up the inlet end (12) of the transport tube (13), and a rear wall (35), in which there is an outlet hole of the blowing nozzle (11), the housing (10) being adapted to receive by gravity a storage and transport case (1) loaded with a component (A) coming from an outlet (6) with said fluid passage hole (4) facing said blowing nozzle (11) and said inlet/outlet opening (3) facing the inlet end (12) of the transport tube (13).

17. A device according to claim 16, **characterized in that** said sending unit (33) comprises locking means to lock the storage and transport case (1) in the housing (10) during a sending operation for sending the component (A) by blowing.

18. A device according to claim 17, **characterized in that** said locking means comprise movement means connected to the blowing nozzle (11) to move the blowing nozzle (11) between a receiving position, in which said rear wall (35) is at a sufficient distance from said front wall (34) to allow the storage and transport case (1) to enter the housing (10), and a locking position, in which the storage and transport case (1) is axially trapped between the front wall (34) and the rear wall (35).

19. A device according to claim 16, **characterized in that** the unloading device comprises two mobile parts (10a, 10b), each of which defines one of said side walls and a portion of said bottom of the housing (10), movement means being connected to at least one of said two mobile parts (10a, 10b) to move at least one of the two mobile parts (10a, 10b) between a receiving position, in which the two mobile parts (10a, 10b) together define the housing (10), and an unloading position, in which an opening is formed between the two mobile parts (10a, 10b), said opening being suitable to allow the storage and transport case (1) to fall by gravity towards an unloading conduit.

20. A device according to claim 16, **characterized in that** the device comprises at least one storage and dispensing unit (46) formed by several storage and dispensing modules (38a, 38b) which can be stacked in a column and/or can be laterally attached in a row, wherein each storage and dispensing module (38a, 38b) of said storage and dispensing unit (46) comprises said structure (18) adapted to operatively receive a number of portable storage units (17) and said movement means for moving the actuation means (22a, 22b) of the step-by-step selecting device (7), said pushing member (32) for the actuation member (24) of the locking element (23), and a sending unit (33) comprising the housing (10), said blowing nozzle (11) connected to means for supplying the pressurized transport fluid, said inlet end (12) of the transport tube (13) and the unloading device for removing one or more storage and transport cases (1) from a selected outlet (6) of a selected portable storage unit (17) and sending the components (A) of the extracted storage and transport case (1) through the transport tube (13) by blowing.

21. A device according to claim 20, **characterized in that** the transport tube (13) of each storage and dispensing module (38a, 38b) of the storage and dispensing unit (46) has an outlet end (39) connected to a fixed support (61) of a selecting device (40) comprising a selecting element (41) connected to an inlet end (42) of a general transport tube (43) and arranged to be moved by driving means along a guide device (63) for the purpose of selectively aligning and communicating said inlet end (42) of said general transport tube (43) with said outlet end (39) of any selected one of the transport tubes (13).

22. A device according to claim 20, **characterized in that** the unloading device of each storage and dispensing module (38a, 38b) is adapted to eject the empty storage and transport cases (1) through an open bottom of the storage and dispensing module (38a, 38b), said storage and transport cases (1) being collected in one or more receptacles (66) provided in the immediately lower storage and dispensing module (38a, 38b) in the storage and dispensing unit (46), the lowermost storage and dispensing module (38a, 38b) of the storage and dispensing unit (46) being arranged on a base module (44) provided with one or more receptacles (45) adapted to collect the storage and transport cases (1) unloaded by the unloading device of this lowermost storage and dispensing module (38a, 38b).

23. A device according to claim 20, **characterized in that** the device comprises at least two different types of storage and transport cases (1) for components (A) of two different size ranges; at least two different types of portable storage units (17) adapted to said two types of storage and transport cases (1); and at least two types of storage and dispensing modules (38a, 38b) adapted to said two types of portable storage units (17) and of storage and transport cases (1), said storage and dispensing unit (46) being formed by one and the same type or different types of storage and dispensing modules (38a, 38b).

24. A device according to claim 5, **characterized in that** each portable storage unit (17) has an electronically readable label containing information about the number of storage elements (5) included in the portable storage unit (17), the number of storage and transport cases (1) stacked in each storage element (5) and the type of components (A) housed in the storage and transport cases (1), reading means adapted to read said label in connection with an electronic control system adapted to control the driving means of movement means according to the information read from the label being arranged in the structure (18).

25. A method for storing and dispensing components, said components (A) being fastening components of the type comprising a head (A1) and a stem (A2), the total length of the component (A) being greater than the maximum width of said head (A1), wherein the method is **characterised by** comprising the steps of:
housing said components (A) in a plurality of storage and transport cases (1), each of which comprises a cavity (2) which can completely house one of said components (A), an inlet/outlet opening (3) at one end, sized to allow the component (A) to enter in/come out from said cavity (2), and a fluid passage hole (4) at an opposite end, sized to allow a transport fluid to pass into the cavity (2) and to prevent the passage of the component (A);
arranging a number of said storage and transport cases (1) with a component (A) housed in each case in at least one storage element (5) wherein the storage and transport cases (1) are pushed towards an outlet (6) of said storage element (5);
allowing said storage and transport cases (1) to pass at least one by one through said outlet (6) by means of a step-by-step selecting device (7);
receiving and supporting at least one storage and transport case (1) loaded with a component (A) coming from the outlet (6) in a housing (10);
supplying said transport fluid to the mentioned fluid passage hole (4) by means of blowing means associated to said housing (10) for the purpose of driving the component (A) out of the storage and transport case (1) through said inlet/outlet opening (3) and into a transport tube (13); and
unloading the empty storage and transport case (1) from the housing (10) by means of an unloading device.

26. A storage and transport case (1) adapted to be used in a device and/or a method for storing and dispensing components, said components (A) being fastening elements of the type comprising a head (A1) and a stem (A2), the total length of the component (A) being greater than the maximum width of said head (A1), said storage and transport case (1) comprising a cavity (2) which can completely house one of said components (A), with an inlet/outlet opening (3) at one end, sized to allow the component (A) to enter in/come out from said cavity (2), and **characterised by** a fluid passage hole (4) at another end, sized to allow a transport fluid to pass into the cavity (2) and to prevent the passage of the component (A), said storage and transport case (1) being externally sized to be received in a housing (10) associated to blowing means adapted to provide said transport fluid to the mentioned fluid passage hole (4) for the purpose of driving the component (A) out of the storage and transport case (1) through said inlet/outlet opening (3).

27. A case according to claim 26, **characterized in that** the storage and transport case (1) is in the form of a revolution tubular body about a longitudinal axis, and the cavity (2) is sized to house the component (A) with looseness and to substantially restrict a rotation of the component (A) about a transverse axis, and wherein the inlet/outlet opening (3) and the fluid passage hole (4) are arranged in opposite longitudinal ends of the cavity (2).

28. A case according to claim 27, **characterized in that** said tubular body is externally cylindrical, the cavity (2) is cylindrical with a diameter equal to the diameter of the inlet/outlet opening (3), and the fluid passage hole (4) is formed in an end wall partially closing an end of the cylindrical body opposite to the inlet/outlet opening (3).

29. A case according to claim 28, **characterized in that** the cylindrical body has a circumferential flange (47) externally formed adjacent to the inlet/outlet opening (3) adapted to cooperate with one or more elements of a device for handling and filling storage and transport cases (1).

## Patentansprüche

1. Vorrichtung zur Lagerung und Abgabe von Bauteilen (A), bei denen es sich um Befestigungselemente handelt, mit einem Kopf (A1) und einem Schaft (A2), wobei die Gesamtlänge des Bauteils (A) größer ist als die maximale Breite des Kopfs (A1), wobei die Vorrichtung **dadurch gekennzeichnet ist, dass** sie folgendes umfasst:
mehrere Lager- und Transportkisten (1), die jeweils einen Hohlraum (2), der eines der Bauteile (A) vollständig aufnehmen kann, mit einer Eingangs-/Ausgangsöffnung (3) an einem Ende, die so bemessen ist, dass das Bauteil (A) in den Hohlraum (2) ein- oder daraus austreten kann, und eine Flüssigkeitsdurchgangsöffnung (4) an einem gegenüber liegenden Ende aufweisen, die so bemessen ist, dass eine Transportflüssigkeit in den Hohlraum (2) eintreten und der Durchgang des Bauteils (A) verhindern kann;
mindestens ein Lagerelement (5), das eine Reihe von Lager- und Transportkisten (1) aufnehmen kann, die einen Auslass (6) aufweisen, in dessen Richtung die Lager- und Transportkisten (1) geschoben werden können, wobei darin (1) jeweils ein Bauteil (A) gelagert ist;
eine schrittweise Auswahlvorrichtung (7), die den Durchgang der Lager- und Transportkisten (1) durch diesen Auslass (6) ermöglicht;
ein Gehäuse (10), das mindestens eine Lager- und Transportkiste (1), die mit einem aus dem Ausgang (6) kommenden Bauteil (A) beladen ist, tragen kann, wobei das Gehäuse (10) mit Blasmitteln verbunden ist, die die Transportflüssigkeit der genannten Flüssigkeitsdurchgangsöffnung (4) zuführen kann, damit das Bauteil (A) aus der Lager- und Transportkiste (1) durch die Einlass-/Auslassöffnung (3) und in ein Transportrohr (13) getrieben wird; sowie
eine Entladungsvorrichtung (53), mit der die leere Lager- und Transportkiste (1) aus dem Gehäuse (10) entladen werden kann.

2. Vorrichtung nach Anspruch 1, **dadurch gekennzeichnet, dass** das Lagerelement (5) so aufgebaut ist, dass es die Bewegungen der darin befindlichen Lager- und Transportkisten (1) wesentlich beschränkt außer in einer Vorwärtsbewegungsrichtung (DA) in Richtung des Auslasses (6) und in der entgegen gesetzten Richtung, wobei die Lager- und Transportkisten (1) im Lagerelement (5) in einer Reihe mit gegenseitigem Kontakt quer zur Vorwärtsbewegungsrichtung (DA) in Richtung des Auslasses (6) angeordnet sind und bei allen die Einlass-/Auslassöffnung (3) einer und derselben Seite gegenüber liegen.

3. Vorrichtung nach Anspruch 2, **dadurch gekennzeichnet, dass** das Lagerelement (5) eine im wesentlichen vertikale Anordnung zum Auslass (6) an dessen unterem Ende einnimmt, wobei die Lager- und Transportkisten (1) aufgrund der Schwerkraft ständig in Richtung des Auslasses (6) geschoben werden.

4. Vorrichtung nach Anspruch 3, **dadurch gekennzeichnet, dass** sie eine Struktur (18) aufweist, bei der eine Reihe der Lagerelemente (5) angeordnet sind, die Lager- und Transportkisten (1) enthalten, die mit verschiedenen Arten von Bauteilen (A) beladen sind, wobei die Lagerelemente (5) jeweils eine und dieselbe Art von Bauteilen (A) enthält, wobei in dieser Struktur (18) Bewegungsmittel zur Bewegung mindestens einiger Bauteile der schrittweisen Auswahlvorrichtung (7), des Gehäuses (10), einer Blasdüse (11) der Blasmittel, mindestens eines Auslassendes (12) des Transportrohrs (13) und der Entladungsvorrichtung an eine geeignete Stelle angeordnet sind, damit diese auf den Auslass (6) eines Lagerelements (5), das eine ausgewählte Art von Bauteilen (A) enthält, einwirken.

5. Vorrichtung nach Anspruch 4, **dadurch gekennzeichnet, dass** die Struktur (18) mehrere tragbare Lagereinheiten (17) aufnehmen kann, die jeweils eine Reihe der Lagerelemente (5) aufweist, deren Auslässe (6) in einer Reihe angeordnet sind, wobei jede tragbare Lagereinheit (17) mit Lager- und Transportkisten (1) gefüllt werden kann, die mit einer vorbestimmten Art von Bauteilen (A) beladen sind, die in der Struktur (18) betriebsbereit positioniert sind und zur Neubefüllung aus der Struktur (18) entfernt werden.

6. Vorrichtung nach Anspruch 5, **dadurch gekennzeichnet, dass** die tragbaren Lagereinheiten (17) jeweils bewegliche Auswahlelemente aufweisen, die einen Bestandteil der schrittweisen Auswahlvorrichtung (7) bilden, wobei die Auswahlelemente jeweilige Kupplungskonfigurationen (20a, 20b) aufweisen, die mit entsprechenden Kupplungskonfigurationen (21 a, 21 b) gekoppelt werden können, die in Betätigungsmitteln (22a, 22b) der schrittweisen Auswahlvorrichtung (7) vorgesehen sind, die bei betriebsbereiter Positionierung der tragbaren Lagereinheit (17) in der Struktur (18) an der Struktur (18) befestigt sind.

7. Vorrichtung nach Anspruch 6, **dadurch gekennzeichnet, dass** die tragbaren Lagereinheiten (17) jeweils ein Verriegelungselement (23) aufweisen, mit dem die Auswahlelemente in einer Verriegelungsstellung verriegelt werden können, bei der alle Auslässe (6) der Auslassreihe geschlossen sind, wobei das Verriegelungselement (23) mit einem Auslösmechanismus verbunden ist, der zum Auslösen der Auswahlelemente durch ein Betätigungsglied (24) betätigt wird, wobei das Betätigungsglied (24) so angeordnet ist, dass es durch einen Drücker (32) betätigt werden kann, der mit Mittelsbetätigung verbindet ist und an der Struktur (18) montiert ist, bei betriebsbereiter Positionierung der tragbaren Lagereinheit (17) in der Struktur (18).

8. Vorrichtung nach Anspruch 7, **dadurch gekennzeichnet, dass** die Auswahlelemente in Form zumindest einer ersten Stange (19a) und zumindest einer zweiten Stange (19b) vorliegen, die verschiebbar in einer Richtung parallel zur Auslassreihe eingebaut sind und in der Vorwärtsbewegungsrichtung (DA) ausreichend voneinander beabstandet sind, dass zwischen ihnen mindestens eine Lager- und Transportkiste (1) aufgenommen werden kann, wobei die Betätigungsmittel (22a, 22b) der schrittweisen Auswahlvorrichtung (7) die erste und zweite Stange (19a, 19b) abwechselnd zwischen der Verschlussstellung und einer Freigabestellung bewegen kann, durch die der Durchgang der Lager- und Transportkisten (1) durch einen ausgewählten Auslass (6) freigegeben werden kann, so dass sich die zweite Stange (19b) in der Freigabestellung befindet, wenn sich die erste Stange (19a) in der Verschlussstellung befindet, und umgekehrt.

9. Vorrichtung nach Anspruch 8, **dadurch gekennzeichnet, dass** das Verriegelungselement (23) durch Federmittel ständig in Richtung einer Verriegelungsstellung gedrückt werden, bei der das Verriegelungselement (23) die erste und zweite Stange (19a, 19b) in einer Verschlussstellung verriegelt, bei der alle Auslässe (6) geschlossen sind, wobei der Auslösmechanismus bei Betätigung des Betätigungsglieds (24) das Verriegelungselement (23) gegen die Schubkraft der Federmittel in eine Auslösstellung bewegen kann, bei der die erste und zweite Stange (19a, 19b) frei beweglich sind.

10. Vorrichtung nach Anspruch 7, **dadurch gekennzeichnet, dass** die Reihen aller Auslässe aller tragbaren Lagereinheiten (17) in der Struktur parallel zueinander und in einer und derselben Ebene senkrecht zur Vorwärtsbewegungsrichtung (DA) der Lagerelemente (5) betriebsbereit positioniert werden.

11. Vorrichtung nach Anspruch 10, **dadurch gekennzeichnet, dass** die Betätigungsmittel (22a, 22b) der schrittweisen Auswahlvorrichtung (7) mit einem ersten Schlitten (25) verbunden sind, der durch Antriebsmittel entlang einer ersten Führungsvorrichtung (26) bewegt werden kann, die mit der Struktur (18) verbunden und in einer Querrichtung (DT) senkrecht zu den Reihen der Auslässe und parallel zu deren Ebene angeordnet sind und hierdurch die Betätigungsmittel (22a, 22b) der schrittweisen Auswahlvorrichtung (7) in einer betriebsbereiten Stellung positioniert werden, um mit der ersten und zweiten Stange (19a, 19b) der schrittweisen Auswahlvorrichtung (7) einer ausgewählten tragbaren Lagereinheit (17) in Wechselwirkung zu treten.

12. Vorrichtung nach Anspruch 11, **dadurch gekennzeichnet, dass** die Betätigungsmittel (22a, 22b) der schrittweisen Auswahlvorrichtung (7) an einen zweiten Schlitten (27) montiert sind, der durch Antriebsmittel entlang einer zweiten Führungsvorrichtung (28) bewegt werden kann, die am ersten Schlitten (25) montiert und in einer Längsrichtung (DL) parallel zu den Reihen der Auslässe angeordnet ist und hierdurch die Betätigungsmittel (22a, 22b) der schrittweisen Auswahlvorrichtung (7) in einer betriebsbereiten Stellung positioniert werden, um mit der ersten und zweiten Stange (19a, 19b) in Wechselwirkung zu treten, die bezüglich eines ausgewählten Auslasses (6) der Auslassreihe der ausgewählten tragbaren Lagereinheit (17) betriebsbereit positioniert sind.

13. Vorrichtung nach Anspruch 12, **dadurch gekennzeichnet, dass** die Kupplungskonfigurationen (21a, 21b) der Betätigungsmittel (22a, 22b) der schrittweisen Auswahlvorrichtung (7) mit den entsprechenden Kupplungskonfigurationen (20a, 20b) der ersten und zweite Stange (19a, 19b) durch eine senkrechte Bewegung der zweiten Führungsvorrichtung (28) zwischen einer Kopplungs- und Entkopplungslage gekoppelt und davon entkoppelt werden können, wobei die Antriebsmittel so angeordnet sind, dass sie die zweite Führungsvorrichtung (28) entlang einer vertikalen Führungsvorrichtung (29) bewegen, die am ersten Schlitten (25) zwischen der Kopplungs- und Entkopplungsstellung montiert ist.

14. Vorrichtung nach Anspruch 13, **dadurch gekennzeichnet, dass** der Drücker (32) bei Ausführung der senkrechten Bewegung zwischen der gekoppelten und entkoppelten Stellung durch die zweite Führungsvorrichtung (28) in einer Halterung der zweiten Führungsvorrichtung (28) in einer geeigneten Lage zum Ein- und Auskuppeln des Betätigungsglieds (24) des Auslösmechanismus des Verriegelungselements (23) der ausgewählten tragbaren Lagereinheit (17) befestigt ist.

15. Vorrichtung nach Anspruch 14, **dadurch gekennzeichnet, dass** das Gehäuse (10), die Blasdüse (11), die mit Mitteln zur Versorgung mit unter Druck stehender Transportflüssigkeit, das Einlassende (12) des Transportrohrs (13) und die Entladungsvorrichtung in einer Transporteinheit (33) integriert sind, die an einen dritten Schlitten (30) montiert ist, der durch die Antriebsmittel entlang einer dritten Führungsvorrichtung (31) bewegt werden kann, die mit dem ersten Schlitten (25) verbunden ist und zur Positionierung der Transporteinheit (33) in einer betriebsbereiten Stellung, um auf einen ausgewählten Auslass (6) der Auslassreihe der ausgewählten tragbaren Lagereinheit (17) einzuwirken, in Längsrichtung (DL) angeordnet ist.

16. Vorrichtung nach Anspruch 15**, dadurch gekennzeichnet, dass** das Gehäuse (10) in Form einer Wiege vorliegt, die durch Seitenwände, einen Boden, eine Vorderwand (34), in die das Einlassende (12) des Transportrohrs (13) mündet, und eine Rückwand (35) definiert ist, in der sich eine Auslassöffnung der Blasdüse (11) befindet, wobei das Gehäuse (10) durch Schwerkraft eine Lager- und Transportkiste (1), die mit einem aus dem Auslass (6) kommenden Bauteil (A) beladen ist, aufnehmen kann, wobei die Flüssigkeitsdurchgangsöffnung (4) der Blasdüse (11) gegenüber liegt und die Einlass-/Auslassöffnung (3) dem Einlassende (12) des Transportrohrs (13) gegenüber liegt.

17. Vorrichtung nach Anspruch 16, **dadurch gekennzeichnet, dass** die Transporteinheit (33) Verriegelungsmittel zur Verriegelung der Lager- und Transportkiste (1) im Gehäuse (10) während eines Transportvorgangs zum Transportieren des Bauteils (A) durch Blasen aufweist.

18. Vorrichtung nach Anspruch 17, **dadurch gekennzeichnet, dass** die Verriegelungsmittel Bewegungsmittel aufweisen, die zur Bewegung der Blasdüse (11) zwischen einer Aufnahmeposition, bei der die Rückwand (35) sich weit genug von der Vorderwand (34) entfernt befindet, dass die Lager- und Transportkiste (1) in das Gehäuse (10) gelangen kann, und einer Verriegelungsposition, bei der die Lager- und Transportkiste (1) zwischen der Vorderwand (34) und der Rückwand (35) axial eingeschlossen ist, mit der Blasdüse (11) verbunden sind.

19. Vorrichtung nach Anspruch 16, **dadurch gekennzeichnet, dass** die Entladungsvorrichtung zwei bewegliche Teile (10a, 10b) aufweist, die jeweils eine der Seitenwände und einen Abschnitt des Bodens des Gehäuses (10) definieren, wobei Bewegungsmittel zur Bewegung mindestens eines der beiden beweglichen Teile (10a, 10b) zwischen einer Aufnahmeposition, bei der die beiden beweglichen Teile (10a, 10b) zusammen das Gehäuse (10) definieren, und einer Entladungsposition, bei der zwischen den beiden beweglichen Teilen (10a, 10b) eine Öffnung gebildet wird, die ermöglicht, dass die Lager- und Transportkiste (1) durch Schwerkraft in Richtung einer Entladungsleitung fällt, mit einem der beiden beweglichen Teile (10a, 10b) verbunden ist.

20. Vorrichtung nach Anspruch 16, **dadurch gekennzeichnet, dass** die Vorrichtung mindestens eine Lager- und Abgabeeinheit (46) aus mehreren Lager- und Abgabemodulen (38a, 38b), die in einer Säule gestapelt werden können und/oder seitlich in einer Reihe verbunden werden können, wobei die Lager- und Abgabemodule (38a, 38b) der Lager- und Abgabeeinheit (46) jeweils die Struktur (18) aufweisen, die betriebsbereit eine Reihe von tragbaren Lagereinheiten (17) und die Bewegungsmittel zur Bewegung der Betätigungsmittel (22a, 22b) der schrittweisen Auswahlvorrichtung (7) aufnehmen kann, den Drücker (32) für das Betätigungsglied (24) des Verriegelungselements (23) sowie eine Transporteinheit (33) aufweist, die das Gehäuse (10), die Blasdüse (11), die mit Mitteln zur Versorgung mit unter Druck stehender Transportflüssigkeit verbunden ist, das Einlassende (12) des Transportrohrs (13) und die Entladungsvorrichtung zur Entnahme einer oder mehrerer Lager- und Transportkisten (1) aus einem ausgewählten Auslass (6) einer ausgewählten tragbaren Lagereinheit (17) und zum Transportieren der Bauteile (A) der entnommenen Lager- und Transportkiste (1) durch das Transportrohr (13) durch Blasen aufweist.

21. Vorrichtung nach Anspruch 20, **dadurch gekennzeichnet, dass** das Transportrohr (13) jedes Lager- und Abgabemoduls (38a, 38b) der Lager- und Abgabeeinheit (46) ein Auslassende (39) aufweist, das mit einer feststehenden Halterung (61) einer Auswahlvorrichtung (40) verbunden ist, die ein Auswahlelement (41) aufweist, das mit einem Einlassende (42) des allgemeinen Transportrohrs (43) verbunden und so angeordnet ist, dass es durch Antriebsmittel entlang einer Führungsvorrichtung (63) bewegt werden kann, um das Einlassende (42) eines allgemeinen Transportrohrs (43) mit dem Auslassende (39) eines beliebig ausgewählten der Transportrohre (13) gezielt auszurichten und zu verbinden.

22. Vorrichtung nach Anspruch 20, **dadurch gekennzeichnet, dass** die Entladungsvorrichtung jedes Lager- und Abgabemoduls (38a, 38b) die leeren Lager- und Transportkisten (1) durch einen offenen Boden des Lager- und Abgabemoduls (38a, 38b) auswerfen kann, wobei die Lager- und Transportkisten (1) in einem oder mehreren Behältern (66) gesammelt werden, die in dem direkt darunter liegenden Lager- und Abgabemodul (38a, 38b) in der Lager- und Abgabeeinheit (46) vorgesehen sind, wobei das unterste Lager- und Abgabemodul (38a, 38b) der Lager- und Abgabeeinheit (46) auf einem Basismodul (44) angeordnet ist, das mit einem oder mehreren Behältern (45) ausgestattet ist, mit denen die Lager- und Transportkisten (1), die von der Entladungsvorrichtung dieses untersten Lager- und Abgabemoduls (38a, 38b) entladen werden, gesammelt werden.

23. Vorrichtung nach Anspruch 20, **dadurch gekennzeichnet, dass** die Vorrichtung mindestens zwei verschiedene Arten von Lager- und Transportkisten (1) für Bauteile (A) verschiedener Größenbereiche; mindestens zwei verschiedene, zu den beiden Arten von Lager- und Transportkisten (1) passende Arten tragbarer Lagereinheiten (17) sowie mindestens zwei, zu den beiden Arten tragbarer Lagereinheiten (17) und zu den beiden Arten von Lager- und Transportkisten (1) passende Arten von Lager- und Abgabemodulen (38a, 38b) aufweist, wobei die Lager- und Abgabeeinheit (46) aus einer und derselben Art oder verschiedenen Arten von Lager- und Abgabemodulen (38a, 38b) besteht.

24. Vorrichtung nach Anspruch 5, **dadurch gekennzeichnet, dass** jede tragbare Lagereinheit (17) eine elektronisch lesbare Kennzeichnung mit Angaben zur Anzahl der in der tragbaren Lagereinheit (17) vorhandenen Lagerelemente (5), zur Anzahl der Lager- und Transportkisten (1), die in dem jeweiligen Lagerelement (5) gestapelt sind, sowie zur Art der in den Lager- und Transportkisten (1) gelagerten Bauteile (A), sowie Lesemittel aufweist, mit denen die Kennzeichnung in Verbindung mit einem elektronischen Steuersystem gelesen werden kann, das die Antriebsmittel der Bewegungsmittel je nach den an der in der Struktur (18) angeordneten Kennzeichnung abgelesenen Angaben steuert.

25. Verfahren zur Lagerung und Abgabe von Bauteilen (A), bei denen es sich um Befestigungselemente handelt, mit einem Kopf (A1) und einem Schaft (A2), wobei die Gesamtlänge des Bauteils (A) größer ist als die maximale Breite des Kopfs (A1), wobei das Verfahren **dadurch gekennzeichnet ist, dass** es folgende Schritte umfasst:
Unterbringung der Bauteile (A) in mehreren Lager- und Transportkisten (1), die jeweils einen Hohlraum (2), der eines der Bauteile (A) vollständig aufnehmen kann, mit einer Eingangs-/Ausgangsöffnung (3) an einem Ende, die so bemessen ist, dass das Bauteil (A) in den Hohlraum (2) ein- oder daraus austreten kann, und eine Flüssigkeitsdurchgangsöffnung (4) am anderen Ende aufweisen, das so bemessen ist, dass eine Transportflüssigkeit in den Hohlraum (2) eintreten und der Durchgang des Bauteils (A) verhindert werden kann;
Anordnung einer Reihe von Lager- und Transportkisten (1) mit einem Bauteil (A), die jeweils in mindestens einem Lagerelement (5) untergebracht sind, wobei die Lager- und Transportkisten (1) in Richtung eines Auslasses (6) des Lagerelements (5) geschoben werden können;
Ermöglichung des zumindest hintereinander erfolgenden Durchgangs der Lager- und Transportkisten (1) durch diesen Auslass (6) mittels einer schrittweisen Auswahlvorrichtung (7);
Aufnahme und Tragen mindestens einer mit einem vom Auslass (6) kommenden Bauteils (A) beladenen Lager- und Transportkiste (1) in einem Gehäuse (10),
Zufuhr der Transportflüssigkeit zu der genannten Flüssigkeitsdurchgangsöffnung (4) mit Blasmitteln, die mit dem Gehäuse (10) verbunden sind, damit das Bauteil (A) aus der Lager- und Transportkiste (1) durch die Einlass-/Auslassöffnung (3) und in ein Transportrohr (13) getrieben wird; sowie
Entladen der leeren Lager- und Transportkiste (1) aus dem Gehäuse (10) mittels einer Entladungsvorrichtung.

26. Lager- und Transportkiste (1), die in einer Vorrichtung und/oder bei einem Verfahren zur Lagerung und Abgabe von Bauteilen zum Einsatz kommen kann, wobei es sich bei den Bauteilen (A) um Befestigungselemente handelt, mit einem Kopf (A1) und einem Schaft (A2), wobei die Gesamtlänge des Bauteils (A) größer ist als die maximale Breite des Kopfs (A1), wobei die Lager- und Transportkiste (1) einen Hohlraum (2) aufweist, der eines der Bauteile (A) vollständig aufnehmen kann, mit einer Eingangs-/Ausgangsöffnung (3) an einem Ende, die so bemessen ist, dass das Bauteil (A) in den Hohlraum (2) ein- oder daraus austreten kann, **dadurch gekennzeichnet, dass** am anderen Ende eine Flüssigkeitsdurchgangsöffnung (4) vorgesehen ist, die so bemessen ist, dass eine Transportflüssigkeit in den Hohlraum (2) eintreten und der Durchgang des Bauteils (A) verhindert werden kann, wobei die Lager- und Transportkiste (1) an der Außenseite so bemessen ist, dass sie in einem Gehäuse (10) aufgenommen werden kann, das mit Blasmitteln verbunden ist, die die Transportflüssigkeit der genannten Flüssigkeitsdurchgangsöffnung (4) zuführen kann, damit das Bauteil (A) aus der Lager- und Transportkiste (1) durch die Einlass-/Auslassöffnung (3) getrieben wird.

27. Kiste nach Anspruch 26, **dadurch gekennzeichnet, dass** die Lager- und Transportkiste (1) in Form eines um eine Längsachse drehbaren Rohrkörpers vorliegt und der Hohlraum (2) so bemessen ist, dass er das Bauteil (A) in loser Form aufnimmt und im wesentlichen eine Drehung des Bauteils (A) um eine Querachse beschränkt, und wobei die Einlass-/Auslassöffnung (3) und die Flüssigkeitsdurchgangsöffnung (4) an gegenüber liegenden Längsenden des Hohlraums (2) angeordnet sind.

28. Kiste nach Anspruch 27, **dadurch gekennzeichnet, dass** der Rohrkörper an der Außenseite zylindrisch ist, der Hohlraum (2) zylindrisch ist mit einem Durchmesser gleich dem Durchmesser der Einlass-/Auslassöffnung (3) und die Flüssigkeitsdurchgangsöffnung (4) an einer Endwand ausgebildet ist, die ein Ende des Zylinderkörpers gegenüber der Einlass-/Auslassöffnung (3) teilweise schließt.

29. Kiste nach Anspruch 28, **dadurch gekennzeichnet, dass** der Zylinderkörper einen Umfangsflansch (47) aufweist, der an der Außenseite neben der Einlass-/Auslassöffnung (3) ausgebildet ist und mit einem oder mehreren Elementen einer Vorrichtung zur Handhabung und Befüllung der Lager- und Transportkisten (1) in Wechselwirkung treten kann.

## Revendications

1. Un dispositif pour stocker et distribuer des composants, ces composants (A) étant des éléments de fixation du genre comportant une tête (A1) et une tige (A2) la longueur totale du composant (A) étant plus grande que la largeur maximale de cette tête (A1), où le dispositif est **caractérisé en ce qu'**il comporte:
une pluralité de cases de stockage et de transport (1) chacune comprenant une cavité (2) pouvant loger complètement un de ces composants (A), avec une ouverture d'entrée/sortie (3) à une extrémité, ayant une taille permettant que le composant (A) entre et sorte de cette cavité (2) et un trou de passage de fluide (4) sur une extrémité opposée ayant une taille permettant qu'un fluide de transport passe dans la cavité (2) et empêchant le passage du composant (A);
au moins un élément de stockage (5) adapté pour y loger un certain nombre de cases de stockage et de transport (1), comprenant une sortie (6) vers laquelle ces cases de stockage et de transport (1) peuvent être poussées avec un composant (A) logé dans chacune d'elles (1);
un dispositif de sélection graduelle (7) pour permettre que ces cases de stockage et de transport (1) passent au moins une par une à travers cette sortie (6);
un bâti (10) adapté pour supporter au moins une case de stockage et de transport (1) chargée avec un composant (A) provenant de la sortie (6) , ce bâti (10) étant relié à des moyes de soufflage adaptés pour alimenter ce fluide de transport à ce trou de passage de fluide (4) afin de faire sortir le composant (A) de la case de stockage et de transport (1) à travers cette ouverture d'entrée/sortie (3) et dans le tuyau de transport (13); et
un dispositif de déchargement (53) adapté pour décharger la case de stockage et de transport vide (1) du bâti (10).

2. Un dispositif conformément à la revendication 1, **caractérisé en ce que** cet élément de stockage (5) est configuré de façon à restreindre sensiblement les déplacements des cases de stockage et de transport (1) excepté dans une direction de déplacement en avant (DA) vers la sortie (6) et en sens contraire, les cases de stockage et de transport (1) étant aménagées dans l'élément de stockage (5) en une rangée, en contact entre elles, transversalement à cette direction de déplacement en avant (DA) vers la sortie (6) et ayant toutes cette ouverture d'entrée/sortie (3) se faisant face et du même côté.

3. Un dispositif conformément à la revendication 2, **caractérisé en ce que** l'élément de stockage (5) adopte un aménagement sensiblement vertical la sortie (6) étant à son extrémité inférieure, les cases de stockage et de transport (1) étant poussées en permanence vers la sortie (6) par gravité.

4. Un dispositif conformément à la revendication 3, **caractérisé en ce qu'**il comporte une structure (18) dans laquelle est aménagée un certain nombre de ces éléments de stockage (5) contenant les cases de stockage et de transport (1) chargées avec différents types de composants (A) où chaque élément de stockage (5) contient un et même type de composant (A), aménagé dans cette structure (18), des moyens de déplacement pour déplacer au moins quelques composants de ce dispositif de sélection graduelle (7), le bâti (10), une buse soufflante (11) des moyens soufflants, au moins une extrémité d'entrée (12) de ce tuyau de transport (13) et ce dispositif de déchargement à un endroit approprié pour qu'il agisse par rapport à la sortie (6) d'un élément de stockage (5) contenant un type choisi de composants (A).

5. Un dispositif conformément à la revendication 4, **caractérisé en ce que** cette structure (18) est adaptée pour recevoir une pluralité d'unités de stockage portables (17), chacune comprenant un certain nombre de ces éléments de stockage (5) avec leurs sorties (6) alignées en une rangée, chaque unité de stockage portable (17) étant adaptée pour être remplie de cases de stockage et de transport (1) chargées avec un type prédéterminé de composants (A), opératoirement placés dans cette structure (18) et retirés de la structure (18) pour la remplir.

6. Un dispositif conformément à la revendication 5, **caractérisé en ce que** chacune de ces unités de stockage portables (17) comprend des membres de sélection mobiles faisant partie de ce dispositif de sélection graduelle (7), ces membres de sélection comprenant des configurations de couplage respectives (20a, 20b) adaptées pour être couplées à des configurations de couplage correspondantes (21a, 21b) qui se trouvent dans des moyens actionneurs (22a, 22b) du dispositif de sélection graduelle (7) montés sur la structure (18) lorsque l'unité de stockage portable (17) est opératoirement placée dans la structure (18).

7. Un dispositif conformément à la revendication 6, **caractérisé en ce que** chaque unité de stockage portable (17) comprend un élément de verrouillage (23) adapté pour verrouiller ces membres de sélection en une position de fermeture dans laquelle toutes les sorties (6) de la rangée de sorties sont fermées, cet élément de verrouillage (23) étant relié à un mécanisme de déclenchement actionné par un membre actionneur (24) pour déclencher les membres de sélection, ce membre d'actionnement (24) étant adapté et aménagé de sorte à être activé par un membre poussoir (32) relié à des moyens d'actionnement montés sur la structure (18) lorsque l'unité de stockage portable (17) est opératoirement placée dans la structure (18).

8. Un dispositif conformément à la revendication 7, **caractérisé en ce que** ces membres de sélection ont la forme d'au moins une première tige (19a) et au moins une deuxième tige (19a) montée coulissante dans une direction parallèle à cette rangée de sorties et écartées les unes des autres dans la direction de déplacement en avant (DA) d'une distance suffisante pour y loger au moins une case de stockage et de transport (1) entre elles, ces moyens d'actionnement (22a, 22b) du dispositif de sélection graduelle (7) étant adaptés pour déplacer alternativement ces première et deuxième tiges (19a, 19b) entre cette position de fermeture et une position de dégagement appropriée pour dégager le passage des cases de stockage et de transport (1) à travers une sortie sélectionnée (6) de sorte que lorsque la première tige (19a) est dans cette position de fermeture, la deuxième tige (19b) est dans la position de dégagement, et vice versa.

9. Un dispositif conformément à la revendication 8, **caractérisée en ce que** cet élément de verrouillage (23) est poussé en permanence par des moyens élastiques vers une position de verrouillage dans laquelle cet élément de verrouillage (23) verrouille les première et deuxième tiges (19a, 19b), en position de fermeture dans laquelle toutes les sorties (6) sont fermées, ce mécanisme de déclenchement étant adapté pour déplacer, lorsque ce membre d'actionnement (24) est activé, l'élément de verrouillage (23) contre la poussée de ces moyens élastiques à une position de déclenchement dans laquelle les première et deuxième tiges (19a, 19b) sont libres d'être déplacées.

10. Un dispositif conformément à la revendication 7, **caractérisé en ce que** les rangées de sorties de toutes les unités de stockage portables (17) opératoirement placées dans la structure (18) sont parallèles les unes aux autres et sont sur un et même plan perpendiculaire à la direction de déplacement en avant (DA) des éléments de stockage (5).

11. Un dispositif conformément à la revendication 10, **caractérisé en ce que** ces moyens d'actionnement (22a, 22b) du dispositif de sélection graduel (7) sont reliés à un premier chariot (25) adapté pour être déplacé par les moyens d'entraînement le long d'un premier dispositif de guidage (26) uni à la structure (18) et aménagé en direction transversale (DT) perpendiculaire aux rangées de sorties et parallèle à leur plan pour placer les moyens d'actionnement (22a, 22b) du dispositif de sélection graduelle (7) en position opératoire pour agir l'un sur l'autre avec les première et deuxième tiges (19a, 19b) du dispositif de sélection graduelle (7) d'une unité de stockage portable sélectionnée (17).

12. Un dispositif conformément à la revendication 11, **caractérisé en ce que** ces moyens d'actionnement (22a, 22b) du dispositif de sélection graduelle (7) sont montés sur un deuxième chariot (27) adapté pour être déplacé par des moyens d'entraînement le long d'un deuxième dispositif de guidage (28) monté sur ce premier chariot (25) et aménagé en direction longitudinale (DL) parallèle aux rangées de sorties pour placer les moyens d'actionnement (22a, 22b) du dispositif de sélection graduelle (7) en position opératoire pour agir l'un sur l'autre avec la première et la deuxième tiges (19a, 19b) opératoirement placées par rapport à une sortie sélectionnée (6) de la rangée de sorties de cette unité de stockage portable sélectionnée (17).

13. Un dispositif conformément à la revendication 12, **caractérisé en ce que** ces configurations de couplage (21a, 21b) des moyens d'actionnement (22a, 22b) du dispositif de sélection graduelle (7) sont adaptés pour être couplés et dégagées des configurations de couplage correspondantes (20a, 20b) des première et deuxième tiges (19a, 19b) par un déplacement vertical du deuxième dispositif de guidage (28), entre les positions de couplage et de dégagement, des moyens entraînement étant aménagés pour déplacer le deuxième dispositif de guidage (28) le long du dispositif de guidage vertical (29) monté sur ce premier chariot (25) entre ces positions couplée et dégagée.

14. Un dispositif conformément à la revendication 13, **caractérisé en ce que** ce membre poussoir (32) est fixé sur un support du deuxième dispositif de guidage (28) dans une position appropriée pour engager et dégager le membre d'actionnement (24) du mécanisme de déclenchement de l'élément de verrouillage (23) de cette unité de stockage portable sélectionnée (17) lorsque le deuxième dispositif de guidage (28) effectue ce déplacement vertical entre ces positions couplée et dégagée.

15. Un dispositif conformément à la revendication 14, **caractérisé en ce que** le bâti (10), cette buse de soufflage (11) qui est reliée à des moyens pour alimenter en fluide de transport sous pression, cette extrémité d'entrée (12) du tuyau de transport (13) et le dispositif de déchargement sont intégrés dans une unité d'envoi (33) montée sur un troisième chariot (30) adapté pour être déplacé par des moyens d'entraînement le long d'un troisième dispositif de guidage (31) uni au premier chariot (25) et aménagé dans cette direction longitudinale (DL) pour placer cette unité d'envoi (33) en position opératoire pour agir par rapport à une sortie sélectionnée (6) de la rangée de sorties de l'unité de stockage portable sélectionnée (17).

16. Un dispositif conformément à la revendication 15, **caractérisé en ce que** le bâti (10) a la forme d'un berceau défini par des parois latérales, un fond, une paroi avant (34), dans laquelle s'ouvrent l'extrémité d'entrée (12) du tuyau de transport (13) et une paroi arrière (35), dans laquelle il y a un trou de sortie de la buse de soufflage (11), le bâti (10) étant adapté pour recevoir par gravité une case de stockage et de transport (1) chargée d'un composant (A) provenant d'une sortie (6) ce trou de passage de fluide (4) faisant face à cette buse de soufflage (11) et cette ouverture d'entrée/sortie (3) faisant face à l'extrémité d'entrée (12) du tuyau de transport (13).

17. Un dispositif conformément à la revendication 16, **caractérisé en ce que** cette unité d'envoi (33) comporte des moyens de verrouillage pour verrouiller la case de stockage et de transport (1) dans le bâti (10) durant une opération d'envoi pour envoyer le composant (A) par soufflage.

18. Un dispositif conformément à la revendication 17, **caractérisé en ce que** ces moyens de verrouillage comportent des moyens de déplacement reliés à la buse de soufflage (11) pour déplacer la buse de soufflage (11) entre une position de réception, dans laquelle cette paroi arrière (35) est à une distance suffisante de cette paroi avant (34) pour permettre que la case de stockage et de transport (1) entre dans le bâti (10) et une position de verrouillage, dans laquelle la case de stockage et de transport (1) est axialement emprisonnée entre la paroi avant (34) et la paroi arrière (35).

19. Un dispositif conformément à la revendication 16, **caractérisé en ce que** le dispositif de déchargement comporte deux parties mobiles (10a, 10b) , chacune définissant une de ces parois latérales et une portion de ce fond du bâti (10) , des moyens de déplacement étant reliés au moins à une de ces parties mobiles (10a, 10b) pour déplacer au moins une des deux parties mobiles (10a, 10b) entre une position de réception, dans laquelle les deux parties mobiles (10a, 10b) ensemble définissent le bâti (10) et une position de déchargement, dans laquelle une ouverture est formée entre les deux parties mobiles (10a, 10b), cette ouverture étant appropriée pour permettre que la case de stockage et de transport (1) tombe par pesanteur vers un conduit de déchargement.

20. Un dispositif conformément à la revendication 16, **caractérisé en ce que** le dispositif comporte au moins une unité de stockage et de distribution (46) formée par plusieurs modules de stockage et de distribution (38a, 38b) pouvant être empilés en une colonne et/ou pouvant être reliés formant une rangée, dans lequel chaque module de stockage et de distribution (38a, 38b) de cette unité de stockage et de distribution (46) comporte cette structure (18) adaptée pour recevoir opératoirement un certain nombre d'unités de stockage portables (17) et ces moyens de déplacement pour déplacer les moyens d' actionnement (22a, 22b) du dispositif de sélection graduelle (7), ce membre poussoir (32) pour le membre d'actionnement (24) de l'élément de verrouillage (23) et une unité d'envoi (33) comportent le bâti (10), cette buse de soufflage (11) reliée aux moyens pour alimenter en fluide de transport sous pression, cette extrémité d'entrée (12) du tuyau de transport (13) et le dispositif de déchargement pour retirer une ou plusieurs cases de stockage et de transport (1) de la sortie sélectionnée (6) d'une unité de stockage portable sélectionnée (17) et envoyer les composants (A) de la case de stockage et de transport extraite (1) à travers le tuyau de transport (13) par soufflage.

21. Un dispositif conformément à la revendication 20, **caractérisé en ce que** le tuyau de transport (13) de chaque module de stockage et de distribution (38a, 38b) de l'unité de stockage et de transport (46) à une extrémité de sortie (39) reliée à un support fixe (61) d'un dispositif de sélection (40) comportant un élément de sélection (41) relié à une extrémité d'entrée (42) d'un tuyau de transport général (43) et aménagé pour être déplacé par des moyens entraînement le long d'un dispositif de guidage (63) à l'effet d'aligner sélectivement et en communication cette extrémité d'entrée (42) de ce tuyau de transport général (43) avec cette extrémité de sortie (39) d'un quelconque des tuyaux de transport (13) sélectionné.

22. Un dispositif conformément à la revendication 20, **caractérisé en ce que** le dispositif de déchargement de chaque module de stockage et de distribution (38a, 38b) est adapté pour éjecter les cases vides de stockage et de transport (1) à travers un fond ouvert du module de stockage et de distribution (38a, 38b) , ces cases de stockage et de transport (1) étant recueillies dans un ou plusieurs réceptacles (66) prévus dans le module de stockage et de distribution immédiatement inférieur (38a, 38b) dans l'unité de stockage et de distribution (46), le module de stockage et de distribution le plus bas (38a, 38b) de l'unité de stockage et de distribution (46) étant aménagé sur un module de base (44) pourvu d'un ou plusieurs réceptacles (45) adaptés pour recueillir les cases de stockage et de transport (1) déchargées par le dispositif de déchargement de ce module de stockage et de distribution le plus bas (38a, 38b).

23. Un dispositif conformément à la revendication 20, **caractérisé en ce que** le dispositif comporte au moins deux types différents de cases de stockage et de transport différentes (1) pour les composants (A) de deux gammes de taille différentes; au moins deux types différents d'unités de stockage portable (17) adaptés à ces deux types de cases de stockage et de transport (1); et au moins deux types de modules de stockage et de distribution (38a, 38b) adaptés à ces deux types d'unités de stockage portables (17) et de cases de stockage et de transport (1), cette unité de stockage et de distribution (46) étant formée par un et même type ou bien des types différents de modules de stockage et de distribution (38a, 38b).

24. Un dispositif conformément à la revendication 5, **caractérisé en ce que** chaque unité de stockage portable (17) possède une étiquette pouvant être lue électroniquement contenant des informations sur le nombre d'éléments de stockage (5) compris dans l'unité de stockage portable (17) , le nombre des cases de stockage et de transport (1) empilées dans chaque élément de stockage (5) et le type de composants (A) logés dans les cases de stockage et de transport (1), des moyens de lecture adaptés pour lire cette étiquette en relation avec un système de contrôle électronique adapté pour contrôler les moyens d'entraînement de moyens de déplacement conformément aux informations lues dans l'étiquette étant aménagés dans la structure (18).

25. Une méthode pour stocker et distribuer des composants, ces composants (A) étant des composants de fixation du type comportant une tête (A1) et une tige (A2), la longueur totale du composant (A) étant plus grande que la largeur maximale de cette tête (A1), dans laquelle la méthode est **caractérisée en ce qu'**elle comporte les étapes suivantes:
loger ces composants (A) dans une pluralité de cases de stockage et de transport (1), chacune comportant une cavité (2) pouvant complètement loger un de ces composants (A), une ouverture d'entrée/sortie (3) à une extrémité, ayant la taille qui permet que le composant (A) entre/sorte de cette cavité (2) et un trou de passage du fluide (4) à une extrémité opposée ayant une taille permettant qu'un fluide de transport passe dans la cavité (2) et empêchant le passage du composant (A);
aménager un certain nombre de ces cases de stockage et de transport (1) avec un composant (A) logé dans chaque case dans au moins un élément de stockage (5) dans lequel les cases de stockage et de transport (1) sont poussées vers une sortie (6) de cet élément de stockage (5);
permettre que ces cases de stockage et de transport (1) passent au moins une par une à travers cette sortie (6) au moyen d'un dispositif de sélection graduelle (7);
recevoir et supporter au moins une case de stockage et de transport (1) chargée d'un composant (A) provenant de la sortie (6) dans un bâti (10);
alimenter avec ce fluide de transport ce trou de passage de ce fluide (4) à travers des moyens de soufflage reliés à ce bâti (10) afin de conduire le composant (A) au-dehors de la case de stockage et de transport (1) à travers cette ouverture d'entrée/sortie (3) et dans un tuyau de transport (13); et
décharger la case de stockage et de transport (1) du bâti (10) au moyen d'un dispositif de déchargement

26. Une case de stockage et de transport (1) adaptée pour être utilisée dans un dispositif et/ou une méthode pour stocker et distribuer des composants, ces composants (A) étant des éléments de fixation du type comportant une tête (A1) et une tige (A2), la longueur totale du composant (A) étant plus grande que la largeur maximale de cette tête (A1), cette case de stockage et de transport (1) comportant une cavité (2) pouvant loger complètement un de ces composants (A), avec une ouverture d'entrée/sortie (3) à une des extrémités, ayant un taille permettant que le composant (A) entre /sorte de cette cavité (2) et **caractérisée par** un trou de passage de fluide (4) à une autre extrémité, ayant une taille permettant qu'un fluide de transport passe dans la cavité (2) et empêchant le passage du composant (A), cette case de stockage et de transport (1) ayant une taille externe pour être reçue dans un bâti (10) associé aux moyens de soufflage adaptée pour alimenter avec ce fluide de transport ce trou de passage de fluide (4) à l'effet d'entraîner le composant (A) au-dehors de la case de stockage et de transport (1) à travers cette ouverture d'entrée/sortie (3).

27. Une case conformément à la revendication 26, **caractérisée en ce que** la case de stockage et de transport (1) a la forme d'un corps tubulaire tournant autour d'un axe longitudinal et la cavité (2) a la taille pour y loger largement le composant (A) et pour restreindre sensiblement une rotation du composant (A) autour d'un axe transversal et où l'ouverture d'entrée/sortie (3) et le trou de passage du fluide (4) sont aménagée sur des extrémités longitudinales opposées de la cavité (2).

28. Une case conformément à la revendication 27, **caractérisée en ce que** ce corps tubulaire est externement cylindrique, la cavité (2) est cylindrique ayant un diamètre égal au diamètre de l'ouverture d'entrée/sortie (3) et le trou de passage du fluide (4) est formé dans une paroi d'extrémité fermant partiellement une extrémité du corps cylindrique opposé à l'ouverture d'entrée/de sortie (3).

29. Une case conformément à la revendication 28, **caractérisée en ce que** le corps cylindrique a une bride circonférentielle (47) externement formée adjacente à l'ouverture d'entrée/sortie (3) adaptée pour coopérer avec un ou plusieurs éléments d'un dispositif pour manier et remplir des cases de stockage et de transport (1).
